# EUROPÄISCHE PATENTSCHRIFT

(11) **EP 3 228 496 B1**
(45) Veröffentlichungstag und Bekanntmachung des Hinweises auf die Patenterteilung: **07.06.2023**
(21) Anmeldenummer: 17163038.7
(22) Anmeldetag: 27.03.2017
(51) Int. Cl.: B60P 3/00, B65G 1/133, G06Q 10/08

(54) **ZUSTELLFAHRZEUG UND VERFAHREN ZUM ABLIEFERN VON SENDUNGEN AN UNTERSCHIEDLICHEN ORTEN ENTLANG EINER ZUSTELLROUTE**
DELIVERY VEHICLE AND METHOD FOR DELIVERING MAIL ITEMS TO DIFFERENT PLACES ALONG A SUPPLY ROUTE
VÉHICULE DE DISTRIBUTION ET PROCÉDÉ DE LIVRAISON D'ENVOIS DANS DIFFÉRENTS ENDROITS SUIVANT UN ITINÉRAIRE DE DISTRIBUTION

(30) Priorität: 08.04.2016 DE 102016106456
(43) Veröffentlichungstag der Anmeldung: 11.10.2017
(73) Patentinhaber: StreetScooter GmbH, 52070 Aachen (DE)
(72) Erfinder: Orth, Felix, 52066 Aachen (DE); Schmitt, Fabian, 4731 Eynatten (BE); Sommer, Martin, 52062 Aachen (DE); Kessels, Uwe, 52249 Eschweiler (DE)
(74) Vertreter: Cohausz & Florack

(56) Entgegenhaltungen:
- DE-A1- 19 809 291
- DE-A1-102006 025 876
- FR-A1- 2 983 441
- NL-C2- 1 015 889
- US-A- 1 970 955
- US-A- 3 999 671

## Beschreibung

### Gebiet

Die Erfindung betrifft ein Zustellfahrzeug zum Abliefern von Sendungen an unterschiedlichen Orten entlang einer Zustellroute, mit einem Laderaum umfassend ein Regalsystem für Sendungen aufweisende Regale. Ferner betrifft die Erfindung ein Verfahren zum Zustellen von Sendungen an unterschiedlichen Orten entlang einer Zustellroute mit einem entsprechenden Zustellfahrzeug.

### Hintergrund

Zum Abliefern von Sendung an unterschiedlichen Orten entlang einer Zustellroute werden unterschiedliche Zustellfahrzeuge eingesetzt. Ein solches Zustellfahrzeug ist beispielsweise aus der NL 1 015 889 C2 bekannt. Die Art der Zustellfahrzeuge hängt dabei auch von der Art der Sendungen ab, die entlang der Zustellroute abgeliefert bzw. zugestellt werden sollen. Die Zustellroute führt dabei in der Regel über den öffentlichen Straßenverkehr. Es handelt sich also bevorzugt nicht um den sogenannten Werksverkehr, also den Gütertransport innerhalb eines Werks und/oder Unternehmens. Hierzu werden typischerweise ganz spezielle Zustellfahrzeuge eingesetzt, die nicht für den Transport über längere Strecken und regelmäßig auch nicht für sehr unterschiedliche Sendungen geeignet sind.

Vorliegend werden unter Sendungen grundsätzlich unterschiedliche Gegenstände verstanden, die vorzugsweise mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Sendungen eines Postunternehmens, die als Postsendungen bezeichnet werden können. Bedarfsweise handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein. Bei Paketsendungen und anderen Sendungen handelte es sich in vielen Fällen um umverpackte Güter, wobei dann die Sendung die Verpackung und das darin verpackte Gut umfassen. Wenn einige dieser Sendungen, insbesondere Sendungen eines Postunternehmens, Paketsendungen, Briefsendungen und/oder Flyer, an ihrem Bestimmungsort, beispielsweise der Zieladresse oder beim Adressaten, abgegeben werden, spricht man regelmäßig von der Zustellung der Sendung. Bei anderen Sendungen spricht man auch von dem Abliefern, Übergeben oder dem Abgeben der Sendung. Diese Unterscheidung ist vorliegend lediglich von untergeordneter Bedeutung, zumal die Grenzen zwischen dem Zustellen, Abliefern, Übergeben oder dem Abgeben, sofern sie tatsächlich existieren, nicht genau gezogen werden können und es für die vorliegende Erfindung auf eine genaue Grenzziehung oder Unterscheidung nicht oder lediglich untergeordnet ankommt.

Wenn die Sendungen nicht allzu groß sind, wie dies beispielsweise bei Paketsendungen der Fall ist, können die Sendungen in einem Regalsystem eines Laderaums des Zustellfahrzeugs verstaut werden. Entlang der Zustellroute werden die Sendungen aus den Regalen des Regalsystems entnommen und abgeliefert bzw. zugestellt. Meist sind die Regale zu beiden Seiten des Zustellfahrzeugs vorgesehen und durch einen zentralen Gang voneinander getrennt, so dass der Fahrer des Zustellfahrzeugs die Sendungen aus den Regalen nehmen kann. Im Falle von autonomen Zustellfahrzeugen, bei denen die Zustellung autonom, also ohne menschliches Eingreifen, erfolgt und bedarfsweise auch das Abfahren einer Zustellroute autonom, also ohne menschliches Eingreifen, erfolgen kann, wird der zentrale Gang des Laderaums zwischen den seitlich angeordneten Regalen beispielsweise für einen Roboter oder ein anderes Transportsystem genutzt, der/das die Sendungen zum Zwecke der Zustellung aus den Regalen entnimmt.

Der von den Regalen für die Aufnahme von Sendungen bereitgestellte Platz ist grundsätzlich begrenzt. Dies liegt insbesondere an der zur Verfügung stehenden Größe des Laderaums des Zustellfahrzeugs und zudem an dem Platzbedarf für das manuelle oder maschinelle Be- und Entladen des Regalsystems. Daher werden bedarfsweise die Größe des Laderaums, die Größe der Sendungen und die Länge der Zustellrouten aufeinander abgestimmt. Oft muss ein Zustellfahrzeug dennoch nacheinander mehrere Zustellrouten abfahren, um alle Sendungen abliefern bzw. zustellen zu können. Nach jeder Fahrt muss das Zustellfahrzeug wieder an ein Verteilzentrum oder ein Lager für die Sendungen, beispielsweise Warenlager, heranfahren, um dort weitere Sendungen in Empfang zu nehmen und im Regalsystem zu verstauen. Das Zurückfahren zum Verteilzentrum oder Lager ist ebenso wie das wiederholte Beladen des Zustellfahrzeugs mit einem erhöhten Zeitaufwand und dementsprechend auch mit einem erhöhten Kostenaufwand verbunden. Die Sendungen werden nämlich typischerweise einzeln von Hand eingeladen und zwar in einer Anordnung und/oder Reihenfolge, die mit der nachfolgend abzufahrenden Zustellroute in Beziehung steht, so dass die Sendungen entlang der Zustellroute leichter und zuverlässiger zu entladen sind.

### Zusammenfassung einiger beispielhafter Ausführungsformen der Erfindung

Der Erfindung liegt die Aufgabe zugrunde, das Zustellfahrzeug und das Verfahren jeweils der eingangs genannten und zuvor näher beschriebenen Art derart auszugestalten und weiterzubilden, dass Zeit und Kosten für das Abliefern oder Zustellen von Sendungen entlang einer Zustellroute eingespart werden können.

Diese Aufgabe ist durch ein Zustellfahrzeug mit den Merkmalen des Anspruchs 1 gelöst.

Ferner ist die genannte Aufgabe durch ein Verfahren gemäß Anspruch 10 gelöst.

Die Erfindung hat also erkannt, dass der zur Verfügung stehende Laderaum des Zustellfahrzeugs durch die verstellbaren Regale effizienter genutzt werden kann, ohne dabei das Beladen mit Sendungen und das Zustellen bzw. Abliefern von Sendungen unverhältnismäßig zu erschweren. Dies beruht auf der Idee, die Regale eines Zustellfahrzeugs nicht ortsfest zu montieren, wie dies bisher der Fall gewesen ist, sondern die Regale im Laderaum des Zustellfahrzeugs verstellbar in einem Regalsystem aufzunehmen. Die Verstellbarkeit der Regale ermöglicht es, einen größeren Anteil des Laderaums mit Regalen zu versehen, da nicht alle Regale gleichzeitig zugänglich sein müssen. Die Regale, zu denen Zugang gewünscht ist, können dennoch in wenigstens eine Entnahmestellung verstellt werden, in der die Regale zugänglich sind. So ist stets ein ungehinderter Zugang zu jedem Regal gegeben, nur nicht gleichzeitig, sondern erst nach einem entsprechenden Verstellen der Regale im Regalsystem. Um eine Sendung aus einem Regal einfach abgeben zu können, wird das Regal dementsprechend zunächst aus einer von mehreren Lagerstellungen, die dem platzsparenden Bereithalten der Regale dienen, in eine Entnahmestellung verstellt, in der die Entnahme der Sendung aus dem Regal händisch oder mittels einer Entnahmeeinrichtung erfolgen kann. Um ein solches Verstellen eines Regals von einer Lagerstellung in die Entnahmestellung und zurück bewirken zu können, ist eine Verstelleinrichtung des Regalsystems vorgesehen. Die Verstelleinrichtung ermöglicht jedoch auch das Verstellen von Regalen von einer Lagerstellung in eine andere Lagerstellung.

Die Verstelleinrichtung ist also insbesondere eine Einrichtung, die das Verstellen insgesamt ermöglicht. Die Verstelleinrichtung kann dann weitere Einrichtungen umfassen, die für das Verstellen der Regale zwar notwendig aber nicht hinreichend sind. Die Verstelleinrichtung kann also grundsätzlich auf sehr unterschiedliche Weise ausgebildet sein, weshalb die Verstelleinrichtung vorliegend insbesondere als eine Art Überbegriff für die für das Verstellen der Regale erforderlichen Bauteile und bedarfsweise zudem für die für das Verstellen der Regale optionalen Bauteile verstanden werden kann.

Verfahrensmäßig kann beispielsweise eine Lagerstellung geräumt werden, um das Regal mit der als nächstes zu entnehmenden Sendung in diese Lagerstellung zu verstellen. Das Regal kann von dieser Lagerstellung entweder direkt in die Entnahmestellung oder aber zunächst in eine andere Lagerstellung verstellt werden. Diese Lagerstellung kann wiederum zunächst durch das Verstellen anderer Regale freigegeben werden. Das Verschieben des die als nächstes zu entnehmende Sendung aufweisenden Regals kann also bedarfsweise schrittweise über mehrere Lagerstellungen hinweg in die Entnahmestellung erfolgen, wobei bedarfsweise mehrfach weitere Regale verstellt werden müssen, um die jeweilige Lagerstellung oder die jeweiligen Lagerstellungen freizugeben. Bevorzugt, etwa wenn die Entnahmestellung bereits durch ein weiteres Regal belegt ist, kann auch das wenigstens eine weitere Regal, bedarfsweise aber auch noch andere Regale verstellt werden, um die Entnahmestellung für das Regal mit der als nächstes zu entnehmenden Sendung freizugeben. In einem besonders einfachen Fall ist die als nächstes aufzunehmende Sendung bereits in einem Regal vorgesehen, das sich bereits in der wenigstens einen Entnahmestellung befindet. Ein Verstellen von Regalen vor dem Entnehmen der entsprechenden Sendung kann dann entfallen. Grundsätzlich wird die bessere Ausnutzung des Laderaums durch den Aufwand für das Verstellen der Regale erkauft. Dieser Aufwand ist insgesamt jedoch gerechtfertigt.

Bei dem Regalsystem der beschriebenen Art sind die Regale im Sinne eines Schiebepuzzles angeordnet und zu bewegen. Ein Schiebepuzzle besteht häufig aus 15 gleichartigen Puzzleteilen, die auf 16 Feldern eines Rasters angeordnet sind. Das Raster weist dabei Kantenlängen auf, die der Länge bzw. Breite von 4 Puzzleteilen entsprechen. Ein Feld bleibt also frei und bildet so ein "Loch" bzw. eine Leerstelle im Puzzle. Ein angrenzendes Puzzleteil kann auf das freie Feld bzw. die Leerstelle verschoben werden und zwar durch eine Verschiebung in Längsrichtung oder in Querrichtung bezogen auf das Raster. Die Aufgabe besteht nun typischerweise darin, die Puzzleteile durch Verschieben der Puzzleteile innerhalb des Rasters in eine bestimmte Reihenfolge zu bringen, etwa die mit den Zahlen von 1 bis 15 gekennzeichneten Puzzleteile in eine aufsteigende Reihenfolge zu bringen. Dazu sind die Puzzleteile quadratisch mit gleichen Kantenlängen ausgebildet. Durch geschicktes Verschieben von Puzzleteilen und Schließen der Leerstelle ohne ein Puzzleteil im Raster wird an einer anderen Stelle im Raster eine Leerstelle gebildet, die dann zum Verschieben wenigstens eines anderen Puzzleteils genutzt werden kann. So kann Schritt für Schritt wenigstens ein Puzzleteil in die gewünschte Position im Raster verschoben werden. Das Prinzip des Schiebepuzzles ist aber nicht auf die Verwendung eines 4-mal-4-Rasters, auf die Verwendung von 15 Puzzleteilen und/oder quadratische Puzzleteile beschränkt. Gleiches gilt auch für das Regalsystem bzw. das Verfahren zum Verschieben der Regale. Dabei kann insbesondere mehr als eine Leerstelle im Regal vorgesehen sein. So kann sichergestellt werden, dass jedes Regal problemlos in die wenigstens eine Entnahmestellung verstellt werden kann. Es kann aber auch zu einer Verkürzung der Zykluszeit beitragen, also der benötigten Zeit, um ein bestimmtes Regal des Regalsystems in die wenigstens eine Entnahmestellung zu verstellen. Für das Verstellen von Regalen ist grundsätzlich mehr Platz, je mehr Leerstellen bzw. unbesetzte Lagerstellen im Regalsystem vorgesehen sind.

Grundsätzlich reicht eine Entnahmestellung aus, aus der alle Sendungen nacheinander aus den Regalen entnommen werden können. Bedarfsweise können aber auch mehrere Entnahmestellungen vorgesehen sein. Die Entnahmestellungen können dabei an unterschiedlichen Orten des Laderaums vorgesehen werden, beispielsweise um problemlos Sendungen an beiden Seiten des Laderaums und/oder an dessen Rückseite aus Regalen entnehmen zu können. Dann bietet es sich an, wenn die Entnahmestellungen durch Lagerstellungen beabstandet sind, um den zur Verfügung stehenden Laderaum besser ausnutzen zu können. Um gleichzeitig oder in kurzer Zeit sehr viele Sendungen entnehmen zu können, können auch mehrere Entnahmestellungen nebeneinander angeordnet sein. Dann müssen nicht mehrere Regale nacheinander in eine Entnahmestellung verstellt werden, um die gewünschten Sendungen aus dem Regalsystem zu entnehmen.

Das Verstellen kann in einer einfachen und somit bevorzugten Weise durch ein Verschieben der Regale erfolgen. Dann können die Regale beispielsweise auf dem Ladeboden des Laderaums aufstehen und müssen nicht komplett vom Regalsystem gehalten werden. Um dennoch leicht verschoben werden zu können, können die Regale Rollen oder Kugeln aufweisen. Ein Verschieben ist aber grundsätzlich einfach zu realisieren, weil die Regale dann vorzugsweise lediglich in einer Ebene bewegt werden müssen.

Zur besseren Verständlichkeit und zur Vermeidung unnötiger Wiederholungen werden nachfolgend bevorzugte Ausgestaltungen des Zustellfahrzeugs und des Verfahrens zum Zustellen von Sendungen gemeinsam beschrieben, ohne jeweils im Einzelnen zwischen dem Zustellfahrzeug und dem Verfahren zu unterscheiden. Für den Fachmann ergibt sich jedoch anhand des Kontextes, welche Merkmale jeweils für das Zustellfahrzeug und das Verfahren bevorzugt sind.

Bei einer ersten besonders bevorzugten Ausgestaltung des Zustellfahrzeugs sind die Lagerstellungen des Regalsystems in zueinander parallelen und senkrechten Reihen angeordnet. Diese Reihen können dabei bedarfsweise in Längsrichtung des Zustellfahrzeugs und quer dazu verlaufen. Dies ermöglicht einerseits eine gute Ausnutzung des Laderaums des Zustellfahrzeugs und andererseits eine leichte Verstellbarkeit der Regale. Die Regale müssen dann beispielsweise lediglich in zwei Richtungen verschoben werden, um das Regal mit der als nächstes zu entnehmenden Sendung in die Entnahmestellung zu verschieben. Diese beiden Richtungen sind dann die Richtungen der, insbesondere gekreuzten, Reihen von Lagerstellungen bzw. Regalen, die sich in bevorzugter Weise in Längsrichtung des Zustellfahrzeugs und quer dazu erstrecken. Die entsprechenden Reihen, insbesondere die in Querrichtung des Zustellfahrzeugs angeordneten Reihen von Lagerstellungen bzw. Regalen können bedarfsweise sehr kurz sein und lediglich zwei Lagerstellungen bzw. Regale umfassen. Längere Reihen sind aber auch möglich.

Damit das Verstellen der Regale in der gewünschten Weise möglich ist, sollte die Summe der Lagerstellungen und der Entnahmestellungen größer sein als die Anzahl der Regale des Regalsystems. Es kann je nach der Anordnung der Lagerstellungen und der Entnahmestellungen eine freie Lagerstellung bzw. Entnahmestellung ausreichen. Bedarfsweise müssen aber wenigstens zwei Stellungen frei bleiben, wobei die entsprechenden Stellungen Lagerstellungen und/oder Entnahmestellungen sein können, je nach der Anordnung der Regale im Regalsystem. Muss nur eine geringe Anzahl von Sendungen auf die Zustellroute mitgenommen werden und müssen gleichzeitig keine oder nur wenige Sendungen auf der Zustellroute ins Regalsystem übernommen werden, bietet es sich an, eine größere Zahl von Lagerstellungen und/oder Entnahmestellungen frei zu lassen, um das Verstellen der vorhandenen Regale zu vereinfachen und die Zykluszeiten zu beschleunigen. Bei der bevorzugten Ausgestaltung des Regalsystems mit einer einzigen Entnahmestellung können also maximal so viele Regale wie Lagerstellungen vorgesehen sein. Weniger Regale sind zwar möglich, führen aber zu einem weniger gut ausgenutzten Laderaum des Zustellfahrzeugs.

Das Verstellen der Regale und die Handhabung des Regalsystems wird vereinfacht, wenn die Regale des Regalsystems wenigstens im Wesentlichen gleichartig ausgebildet sind. So muss nicht hinsichtlich der Regale, sondern bedarfsweise lediglich hinsichtlich der darin aufgenommenen Sendungen unterschieden werden. Zudem können Regale mit gleichartiger äußerer Form und/oder Ausgestaltung auch gleichartig verstellt, insbesondere verschoben, werden, was zu einer weiteren Vereinfachung, insbesondere des Verfahrens, führt.

Um die Regale möglichst flexibel nutzen zu können, wobei die Regale beispielsweise nicht in Abhängigkeit von der Reihenfolge der Zustellung oder Abgabe der Sendungen mit den Sendungen beladen zu müssen, ist es zweckmäßig, wenn es die Verstelleinrichtung ermöglicht, wenigstens ein Regal in jede Lagerstellung des Regalsystems zu verstellen. Der genannte Vorteil kommt dabei umso mehr zum Tragen, für je mehr Regale dies gilt. Mithin ist es besonders bevorzugt, wenn jedes Regal des Regalsystems mittels der Verstelleinrichtung wahlweise in jede der Lagerstellungen verstellt, insbesondere verschoben, werden kann. Unabhängig davon können die verwendeten Regale besonders zweckmäßig genutzt werden, wenn die Regale, insbesondere jedes der Regale, des Regalsystems in die wenigstens eine Entnahmestellung verstellt werden kann. Sofern mehrere Entnahmestellungen vorgesehen sind, ist es bevorzugt, wenn die Regale, insbesondere alle Regale, wenigstens in eine Entnahmestellung, aus Gründen der höheren Flexibilität, insbesondere in alle Entnahmestellungen, verstellt werden können.

Das Verstellen der Regale im Regalsystem wird beispielsweise dadurch vereinfacht, dass die Verstelleinrichtung eine Führungseinrichtung, vorzugsweise umfassend ein Schienensystem, zum Führen der Regale im Regalsystem zwischen mehreren Lagerstellungen und der Entnahmestellung aufweist. Die Regale werden also in und/oder entlang den Führungseinrichtungen bzw. des entsprechenden Schienensystems geführt. So werden auch die Freiheitsgrade beim Verstellen der Regale eindeutig vorgegeben. Bedarfsweise können die Regale auch mittels Rollen, insbesondere entsprechenden Rollenwagen an bzw. in der Führungseinrichtung geführt sein, was den Kraftaufwand für das Verstellen verringert und die Zuverlässigkeit beim Verstellen erhöht. Dies ist auf besonders einfache Weise möglich, wenn die Rollen oder Rollenwagen entlang von Schienen geführt werden. Die Regale können auch auf dem Ladeboden des Laderaums mittels Rollen entlangrollen. Da die Regale vorzugsweise in zueinander senkrecht stehenden Richtungen verstellt, insbesondere verschoben, werden sollen, können auch Kugelelemente an den Unterseiten der Regale vorgesehen sein, die einem Richtungswechsel keinen nennenswerten Widerstand entgegensetzen, wie dies bei Rollen durch eine etwaig erforderliche Drehung der Rollen der Fall sein kann.

Damit das Verstellen der Regale zielgerichtet und in einer vorbestimmten Weise erfolgt, kann die Verstelleinrichtung eine Transporteinrichtung zum Transportieren der Regale von einer Lagerstellung in eine andere Lagerstellung und von einer Lagerstellung in die Entnahmestellung umfassen. Die Transporteinrichtung transportiert dann beispielsweise immer die Regale in einem Schritt in eine Richtung, wie dies für das Verstellen eines Regals in die wenigstens eine Entnahmestellung zweckmäßig ist. Dabei muss die Transporteinrichtung nicht jedes Regal einzeln transportieren. Die Transportiereinrichtung kann auch eine Reihe von Regalen gemeinsam verstellen. So kann beispielsweise ein Regal über die Transporteinrichtung in eine Richtung verschoben werden, und zwar zusammen mit den Regalen, die in diese Richtung gesehen an das transportierte Regal angrenzen. Diese werden dann von dem eigentlich transportierten Regal geschoben, insbesondere vor dem eigentlich transportierten Regal hergeschoben. Im Falle einer Führungseinrichtung erfolgt auch das Transportieren bestimmter Regale bevorzugt entlang der Führungseinrichtung.

Die Transporteinrichtung soll das Verstellen jeweils bestimmter Regale unabhängig von anderen Regalen ermöglichen sowie einfach und platzsparend ausgebildet sein. Dies ist möglich, indem die Transporteinrichtung, etwa formschlüssig, an wenigstens einem zu verstellenden Regal angreift. Dazu kann die Transporteinrichtung wenigstens einen Arm aufweisen, der von einem Antrieb angetrieben wird. Der Antrieb der Transporteinrichtung kann wenigstens einen Linearantrieb, insbesondere mehrere davon aufweisen. Diese sind einfach und erlauben eine definierte Bewegung. Unterschiedliche Bewegungen können daher durch unterschiedliche Antriebe, insbesondere Linearantriebe, erreicht werden.

Das Verstellen der Regale erfolgt vorzugsweise in einer vorgegebenen Weise, die davon abhängig sein kann, welches Regal die als nächstes zuzustellende Sendung enthält. Das Verstellen, insbesondere das Verschieben, der Regale mittels der Verstelleinrichtung folgt daher bevorzugt gesteuert durch eine Steuereinrichtung. Die Steuereinrichtung steuert dabei bevorzugt sowohl das Verstellen des Regals mit der als nächstes zu entnehmenden Sendung zur Entnahmestellung als auch das Verstellen der übrigen Regale, die für das Verstellen des Regals mit der als nächstes zu entnehmenden Sendung in die Entnahmestellung verstellt werden müssen, jedenfalls soweit dies erforderlich ist. Für die Steuerung des Verstellens der Regale ist es zweckmäßig, wenn die Steuerungseinrichtung geeignete Informationen darüber hat, welche Sendungen in welchen Regalen aufgenommen sind und in welcher Position im Regalsystem sich die den Sendungen zugeordneten Regale befinden, um das richtige Regal in die Entnahmestellung zu bewegen. Die Information über die Anordnung der Regale im Regalsystem können bedarfsweise über wenigstens einen vorgesehenen Sensor erfasst werden. Der Sensor kann beispielsweise ein optischer Sensor sein und/oder unterschiedliche Codes, wie etwa Barcodes, der Regale erfassen. Dies kann aber auch entbehrlich sein, wenn der Steuereinrichtung über Sensoren oder anderweitig die Positionen der einzelnen Regale im Regalsystem wenigstens in einer Ausgangsposition mitgeteilt werden. Dies kann beispielsweise vor dem Antritt der Zustelltour und nach dem Beladen des Zustellfahrzeugs mit Sendungen erfolgen. Wenn die Regale anschließend verstellt werden, insbesondere in der von der Steuerungseinrichtung vorgegebenen Weise, kann die Steuereinrichtung anhand der Bewegungen der Regale ausgehend von der Position der Regale in der Ausgangsposition ermitteln wo sich die einzelnen Regale gerade im Regalsystem befinden.

Die Handhabung des Regalsystems wird einfacher, wenn die Regale jeweils mehrere Segmente zur Aufnahme von Sendungen aufweisen. Diese Segmente können der Einfachheit halber im Sinne von Regalböden übereinander angeordnet sein. Ganz grundsätzlich ist es in diesem Zusammenhang bevorzugt, wenn die Regale auf den verschiedenen Segmenten beladen sind, die an demselben Ort entlang der Zustellroute oder an entlang der Zustellroute nacheinander angefahrenen Orten zugestellt werden sollen. Dadurch wird ein unnötiges Verstellen der Regale vermieden. Damit die Sendungen nicht versehentlich von den Regalen bzw. von den Segmenten rutschen, können die Sendungen beispielsweise einfach aber wirkungsvoll formschlüssig von den Segmenten gehalten werden. Um die Handhabung der Sendungen zu vereinfachen, insbesondere für den Fall, dass die Sendungen sehr unterschiedliche Formen und/oder Größen aufweisen, können die Regale Trägerelemente zur Aufnahme der Sendungen aufweisen. Besonders einfach ist es dabei, wenn die Trägerelemente als Boxen ausgebildet sind. Dann können die Sendungen beispielsweise formschlüssig im Trägerelement gehalten und das Trägerelement beispielsweise formschlüssig im Regal gehalten sein. Die Größe und die Form der Sendungen spiel dabei solange keine Rolle, wie die Sendungen von den Trägerelementen aufgenommen werden können, weshalb die Trägerelemente nicht zu klein gewählt werden sollten. Durch die Verwendung der Trägerelemente können diese auf definierte, vorzugsweise immer gleiche, Weisen mit den Sendungen aus den Regalen entnommen werden, insbesondere ohne dabei Rücksicht auf die Art und Größe der Sendungen zu nehmen. Diese Handhabung der Sendungen ist dann unabhängig von der Art oder Form der Sendungen und somit einfach und zuverlässig zu erreichen. Eine weitere Vereinfachung kann erreicht werden, wenn die Sendungen in den Trägerelementen zugestellt bzw. abgegeben werden. Auch dies ist dann im Wesentlichen unabhängig von der Art und der Form der Sendungen und damit sehr zuverlässig möglich. So wird insbesondere auch ein zuverlässiges autonomes Zustellen bzw. Abliefern der Sendungen ohne menschliches Eingreifen sichergestellt. Die Verwendung von Trägerelementen erlaubt beispielsweise eine einfache Beladung der Regale bei guter Ausnutzung des vorhandenen Platzes. Wenn beispielsweise eine sehr hohe Sendung aufgenommen werden soll, kann darüber auf so viele Trägerelemente verzichtet werden, dass die Sendung im Regal aufgenommen werden kann. Nach dem Zustellen der Sendung, können an die entsprechende Stelle im Regal bedarfsweise wieder mehrere Trägerelemente mit niedrigeren Sendungen übereinander angeordnet werden. Man spricht in diesem Zusammenhang auch von einem dynamischen Packen der Regale.

Das Entnehmen und bedarfsweise das Abgeben oder Zustellen der Sendungen lässt sich auch dadurch vereinfachen, dass eine entsprechende Entnahmeeinrichtung zur Entnahme einer Sendung, insbesondere eines Trägerelements, aus dem sich in der Entnahmestellung befindenden Regal vorgesehen wird. Dies bedarf dann auch keines menschlichen Eingreifens und kann so auch für ein autonomes Entnehmen der Sendungen aus den Regalen genutzt werden. Um die Sendungen von unterschiedlichen Segmenten der Regale problemlos entnehmen zu können, bietet sich insbesondere die Verwendung einer Entnahmeeinrichtung umfassend einen Roboterarm an. Die Entnahmeeinrichtung kann neben dem reinen Entnehmen der Sendungen auch für das Übergeben, Zustellen und/oder Abliefern der Sendungen außerhalb des Zustellfahrzeugs genutzt werden. Dies begünstigt zudem einen autonomen Betrieb des Zustellfahrzeugs. Auch in diesem Zusammenhang wird die Zuverlässigkeit erhöht, wenn die Entnahmeeinrichtung nicht die Sendung direkt, sondern das die Sendung aufweisende Trägerelement handhabt. Alternativ oder zusätzlich können auf der Zustellroute aber auch Sendungen in das Zustellfahrzeug aufgenommen bzw. übernommen werden. Diese Sendungen können der Einfachheit halber von der Entnahmeeinrichtung ergriffen und in das Zustellfahrzeug bewegt werden. Vorzugsweise wird die Sendung dabei an ein sich in der Entnahmestellung befindendes Regal übergeben. Auch dies erfolgt dabei aus den genannten Gründen bevorzugt zusammen mit einem Trägerelement, das die entsprechende Sendung trägt. Denkbar ist auch, dass ein leeres Trägerelement ohne Sendung übernommen und in ein Regal übergeben wird, etwa im Austausch zu einem Trägerelement, das zusammen mit einer Sendung zugestellt bzw. abgeliefert wird. So sammeln sich die Trägerelemente nicht entlang der Zustellroute an.

Ein versehentliches Verstellen der Regale im Regalsystem kann in einfacher Weise verhindert werden, indem wenigstens einzelnen Regalen eine Arretiereinrichtung zum Arretieren der jeweiligen Regale in einer Lagerstellung zugeordnet ist. Bedarfsweise kann auch einem Regal in der wenigstens einen Entnahmestellung eine Arretiereinrichtung zugeordnet sein. Dies ist beispielsweise nützlich, wenn ein Regal in der wenigstens einen Entnahmestellung angeordnet ist, während das Zustellfahrzeug in Bewegung ist. Um sicherzugehen, dass alle Regale während des Fahrens des Zustellfahrzeugs zuverlässig arretiert sind, so dass nicht darauf vertraut werden muss, dass einzelne Regale durch arretierte andere Regale gehalten werden, bietet es sich an, wenn allen Regalen eine Arretiereinrichtung zugeordnet ist. Die Regale können dabei beispielsweise an der Verstelleinrichtung und/oder der Führungseinrichtung arretiert werden. Alternativ oder zusätzlich können die Regale aber auch am Ladeboden des Laderaums arretiert werden. Dazu kann der Ladeboden entsprechende Vertiefungen oder Erhebungen aufweisen. Die Regale können aber auch ohne solche Hilfsmittel reibschlüssig gegen den Ladeboden gepresst werden. Bedarfsweise wird dies durch ein Verkeilen der Regale zwischen dem Ladeboden und der Verstelleinrichtung, insbesondere der Führungseinrichtung erreicht werden. Um die Regale gegenüber einem Verschieben in einer Hin- und einer Rückrichtung gegen ein versehentliches Verschieben zu sichern, bietet es sich an, jeweils wenigstens ein endständiges Regal in diesen beiden Richtungen zu arretieren. Zwischen diesen endständigen Regalen angeordnete Regale können dann bedarfsweise über die Arretierung der endständigen Regale hinreichend gesichert sein. Dabei ist es alternativ oder zusätzlich bevorzugt, wenn die Regale sowohl längs als auch quer zum Zustellfahrzeug jeweils in der Hin- und der Rückrichtung gegen ein versehentliches Verschieben gesichert bzw. arretiert sind, und zwar beispielsweise in der zuvor genannten Weise. Wie viele endständige Regale arretiert werden sollten, hängt dabei bedarfsweise auch von der Ausgestaltung der Führungseinrichtung ab. In einer Richtung, in der sich ein Regal infolge der Führungseinrichtung erst gar nicht verstellen kann, bedarf es auch keiner Arretierung. Es müssen also nicht die endständigen Regale jeder Reihe von Regalen arretiert werden, insbesondere wenn ein Verstellen der Regale in der Richtung der entsprechenden Reihe bereits aus anderen Gründen verhindert wird. Es ist aber keineswegs erforderlich und unter Umständen auch nicht gewünscht, dass die Regale während der Fahrt des Zustellfahrzeugs arretiert sind. Es kann nämlich zum Zwecke der Zeitersparnis bevorzugt sein, dass die Verstellung der Regale wenigstens teilweise bereits während der Fahrt erfolgt. So wird beispielsweise erreicht, dass das Regal mit der als nächstes zu entnehmenden Sendung bereits während der Fahrt des Zustellfahrzeugs in die wenigstens eine Entnahmestellung oder wenigstens in die Nähe der Entnahmestellung verstellt werden kann.

Das Beladen des Zustellfahrzeugs mit Sendungen, die entlang der Zustellroute abgegeben bzw. zugestellt werden sollen, kann beschleunigt werden, wenn die Regale bereits außerhalb des Zustellfahrzeugs, insbesondere in einem Verteilzentrum, einem Lager, insbesondere Warenlager, oder dergleichen mit den Sendungen versehen werden. Dies kann bereits vor dem Eintreffen des Zustellfahrzeugs geschehen, wodurch das Beladen weiter beschleunigt wird. Das Zustellfahrzeug kann dann zudem die Regale mit den Sendungen sehr schnell aufnehmen. Dies ist viel schneller möglich, als wenn die Sendungen einzeln von Hand verladen werden müssten. Damit die Regale einfach und schnell in das Regalsystem aufgenommen werden können, weist das Regalsystem wenigstens eine Aufnahmeeinrichtung zum Aufnehmen von mit Sendungen versehenen Regalen auf. Dabei kann es sich beispielsweise um einen besonderen Bereich der Verstelleinrichtung oder der Führungseinrichtung handeln, über den gezielt Regale aufgenommen werden können. Bedarfsweise handelt es sich um eine Öffnung einer Schiene oder einen Schienenabschnitt, der geöffnet werden kann, damit die Regale beispielsweise in die Schiene eingefädelt oder auf die Schiene aufgefädelt werden können. Damit die Regale der vorangegangenen Zustellroute durch Regale für die nachfolgende Zustellroute einfach ersetzt werden können, kann das Regalsystem eine Abgabeeinrichtung aufweisen. Auf diese Weise können auch Sendungen ausgeladen werden, die nicht zugestellt werden konnten oder nicht abgegeben wurden. Alternativ oder zusätzlich können aber auch Sendungen abgeladen werden, die auf der Zustellroute aufgenommen, also übernommen und in Regalen abgelegt, worden sind und die an anderer Stelle zugestellt werden sollen. Die Abgabeeinrichtung kann dabei ebenso ausgebildet sein, wie die Aufnahmeeinrichtung oder wie dies für die Aufnahmeeinrichtung zuvor beispielhaft erläutert worden ist. Besonders einfach ist es konstruktiv, wenn es sich bei der Aufnahmeeinrichtung und bei der Abgabeeinrichtung um ein und dieselbe Einrichtung handelt. Dann ist unter Umständen das gleichzeitige Abgeben und Aufnehmen von Regalen nicht unabhängig voneinander möglich. Dies kann dann jedoch bedarfsweise dadurch erreicht werden, dass das Regalsystem mit wenigstens zwei unterschiedlichen Aufnahme/Abgabe-Einrichtungen ausgerüstet wird.

Bei dem Verfahren werden wenigstens bestimmte Regale mit Hilfe der Verstelleinrichtung nacheinander in unterschiedliche Richtungen verstellt, wobei das Verstellen schrittweise erfolgt. So kann das Regal mit der als nächstes zu entnehmenden Sendung überhaupt erst oder jedenfalls besonders einfach und schnell in die Entnahmestellung gebracht, also verstellt oder verschoben, werden. Zudem erlaubt die Verstellung der Regale in unterschiedliche Richtungen die zweckmäßige Verwendung von Regalsystemen mit einer hohen Anzahl an Lagerstellungen und/oder mit vielen Reihen von Regalen bzw. Lagerstellungen. Einfach und für die Ausnutzung des Laderaums zweckmäßig ist es dabei, wenn die Regale mit der Verstelleinrichtung sowohl längs als auch quer zum Zustellfahrzeug verstellt, insbesondere verschoben, werden.

Das Verstellen, insbesondere das Verschieben, des wenigstens einen Regals im Regalsystem kann vorzugsweise so erfolgen, dass wenigstens eine Lagerstellung freigegeben wird, die zuvor durch ein Regal belegt oder besetzt gewesen ist. So kann Platz für das Verschieben wenigstens eines Regals in die gewünschte Richtung, nämlich insbesondere in Richtung der freigegebenen Lagerstellung, geschaffen werden. Das Regal, das dabei in die zuvor freigewordene Lagerstellung gelangt, kann bevorzugt das Regal mit der als nächstes zu entnehmenden Sendung sein. Dies muss aber nicht der Fall sein, beispielsweise wenn das die als nächstes zu entnehmende Sendung aufweisende Regal zusammen mit dem die freie Lagerstellung belegenden Regal verschoben wird oder wenn das Verschieben anderer Regale als das die zu entnehmende Sendung aufweisende Regal den Platz für eine anschließende Verschiebung des Regals mit der als nächstes zu entnehmenden Sendung schafft. Da der für das Verschieben von Regalen zur Verfügung stehende Platz jeweils begrenzt ist, ist es besonders bevorzugt, wenn das Verstellen schrittweise erfolgt und dabei jeweils schrittweise Lagerstellen freigegeben und gleichzeitig zuvor freigegebene Lagerstellen wieder belegt werden. Je nachdem von wo nach wo im Regalsystem das Regal mit der als nächstes zu entnehmenden Sendung verstellt werden soll, müssen die zuvor beschriebenen Verstellschritte der Regale wiederholt nacheinander durchgeführt werden, um das gewünschte Regal Schritt für Schritt bis in die wenigstens eine Entnahmestellung zu verstellen oder bedarfsweise bis in eine Lagerstellung zu verstellen, aus der das Regal dann direkt in die gewünschte Entnahmestellung verstellt werden kann.

Damit das schrittweise Verstellen der Regale zielgerichtet erfolgt, so dass die Zykluszeiten für das Verstellen eines bestimmten Regals in die Entnahmestellung verringert werden können, bietet sich die Verwendung einer Steuereinrichtung an. Die Steuereinrichtung kann dann in Abhängigkeit wenigstens von der Anordnung des Regals mit der als nächstes zu entnehmenden Sendung, insbesondere aber von der Anordnung aller Regale im Regalsystem, eine zweckmäßige Abfolge des schrittweisen Verstellens von Regalen für das Verstellen des die als nächstes zu entnehmende Sendung enthaltenden Regals in die Entnahmestellung ermitteln. Regelmäßig wird es eine Mehrzahl, wenn nicht gar eine Vielzahl, von unterschiedlichen Abfolgen von Verschiebeschritten geben, die die Verstellung eines bestimmten Regals in eine bestimmte Entnahmestellung zur Folge hat. Welche dieser Abfolgen aber besonders kurz ist oder sehr viele besonders einfach und/oder schnell durchzuführende Verschiebeschritte umfasst, liegt im Vorhinein nicht unbedingt auf der Hand. Die Steuereinrichtung kann also beispielsweise basierend auf bestimmten Heuristiken oder Regeln eine geeignete Abfolge von Verschiebeschritten ermitteln. Die Steuereinrichtung kann aber auch wenigstens einige der möglichen Abfolgen theoretisch durchgehen und miteinander vergleichen, um so eine besonders kurze oder besonders schnelle Abfolge von Verschiebeschritten vorzuschlagen. Die Steuereinrichtung gibt dann vorzugsweise die als bevorzugt erkannte Abfolge von Verschiebeschritten vor. Somit erfolgt das Verstellen durch die Verstelleinrichtung nach der Vorgabe der Steuereinrichtung.

Damit das Beladen des Zustellfahrzeugs sehr schnell erfolgen kann und das Beladen der Regale bereits vor dem Eintreffen des Zustellfahrzeugs an dem Ort, an dem die zuzustellenden Sendungen bereitgehalten werden, also etwa in einem Verteilzentrum, in einem Warenlager oder dergleichen, erfolgen kann, können vor dem Abfahren der Zustellroute die mit den Sendungen bestückten Regale in das Regalsystem des Zustellfahrzeugs aufgenommen, also von dem Zustellfahrzeug übernommen werden. Alternativ oder zusätzlich können auch Regale des Regalsystems vor dem Abfahren der Zustellroute abgegeben werden, also beispielsweise an das Verteilzentrum oder das Warenlager. Dadurch wird bedarfsweise Platz geschaffen, um bereits mit Sendungen beladene Regale aufzunehmen. Auf diese Weise können aber auch während des Abfahrens der Zustelloute zum anderweitigen Zustellen aufgenommene Sendungen einfach und schnell abgegeben werden. Die entsprechenden Sendungen werden entsprechend des Zielorts weitertransporteiert und bedarfsweise zum Zwecke der Zustellung wieder an ein Regal eines Regalsystem eines entsprechenden Zustellfahrzeugs abgegeben.

Das Entnehmen von Sendungen kann vereinfacht und/oder beschleunigt werden, wenn dazu eine Entnahmeeinrichtung verwendet wird. Dies erlaubt beispielsweise auch das autonome Zustellen oder Abliefern von Sendungen. Der Einfachheit halber und zum Bereitstellen unterschiedlicher Bewegungen ist es zweckmäßig, wenn die Entnahmeeinrichtung mit einem Roboterarm ausgerüstet ist. Der Roboterarm kann dann eine Sendung aus dem Regal entnehmen, das in der zugehörigen Entnahmestellung angeordnet ist. Damit beim Entnehmen der Sendungen aus dem Regal keine Rücksicht auf die Art, die Größe und/oder die Form der Sendung genommen werden muss, kann die Entnahmeeinrichtung, insbesondere der Roboterarm, ein eine Sendung aufweisendes Trägerelement aus dem in der Entnahmestellung angeordneten Regal entnehmen. Die Trägerelemente der Regale weisen dabei vorzugsweise einheitliche und/oder genormte Größen auf, was die Handhabung der Trägerelemente vereinfacht. Hierbei kommen beispielsweise sogenannte Euroboxen in Frage, die beispielsweise in den Größen 40 x 30 x 9 cm bis zur Größe 80 x 60 x 44 cm erhältlich sind und wahlweise offene oder geschlossene Handgriffe, Deckel und/oder Etikettenclips aufweisen können. Die Trägerelemente können also grundsätzlich rechteckig ausgebildet sein. Es sind aber auch Trägerelemente mit einer quadratischen oder einer anderen Querschnittsform denkbar. Alternativ oder zusätzlich kann die Entnahmeeinrichtung eine Sendung von außen bezogen auf das Zustellfahrzeug aufnehmen und in das in der Entnahmestellung angeordnete Regal übergeben. Auch dieses kann vereinfacht werden, wenn die Sendung von einem Trägerelement getragen ist. Die Entnahmeeinrichtung kann also bedarfsweise auch Sendungen aufnehmen, was eine zusätzliche Sendungsübernahmeeinrichtung entbehrlich macht. Wenn dies gewünscht ist, kann aber bedarfsweise auch eine Sendungsübernahmeeinrichtung vorgesehen sein. Die Sendungen können außerhalb des Zustellfahrzeugs grundsätzlich auf unterschiedliche Weise bereitgestellt werden. Bedarfsweise können die Sendungen oder die Trägerelemente händisch, also manuell, übergeben werden. Die Sendungen oder Trägerelemente können aber auch aus außerhalb des Zustellfahrzeugs vorgesehenen Regalen entnommen werden, die den Regalen des Regalsystems vorzugsweise ähneln. Die Sendungen können aber auch in speziellen Sendungskästen, etwa Briefkästen oder Paketkästen, bereitgehalten und bedarfsweise mittels der Entnahmeeinrichtung daraus entnommen werden.

Nachfolgend wird die Erfindung anhand einer lediglich Ausführungsbeispiele darstellenden Zeichnung näher beschrieben. In der Zeichnung zeigt
- Fig. 1: ein erstes erfindungsgemäßes Zustellfahrzeug in einer schematischen Draufsicht,
- Fig. 2A-G: Verstellschritte beim Verstellen von Regalen im Zustellfahrzeug von Fig. 1 in einer schematischen Draufsicht,
- Fig. 3: ein zweites erfindungsgemäßes Zustellfahrzeug in einer schematischen Draufsicht,
- Fig. 4A-B: Verstellschritte beim Verstellen von Regalen im Zustellfahrzeug von Fig. 3 in einer schematischen Draufsicht,
- Fig. 5: das Zustellfahrzeug von Fig. 3 in einer Schnittansicht entlang der Schnittebene V-V aus Fig. 3,
- Fig. 6: das Zustellfahrzeug von Fig. 3 in einer Schnittansicht entlang der Schnittebene VI-VI aus Fig. 5,
- Fig. 7A-B: eine Detaildarstellung der Fig. 6 in einer Schnittansicht quer und längs zum Zustellfahrzeug aus Fig. 3,
- Fig. 8: eine Detaildarstellung des Zustellfahrzeug aus Fig. 3 in einer schematischen Draufsicht auf den Ladeboden und
- Fig. 9: ein drittes erfindungsgemäßes Zustellfahrzeug in einer schematischen Draufsicht,

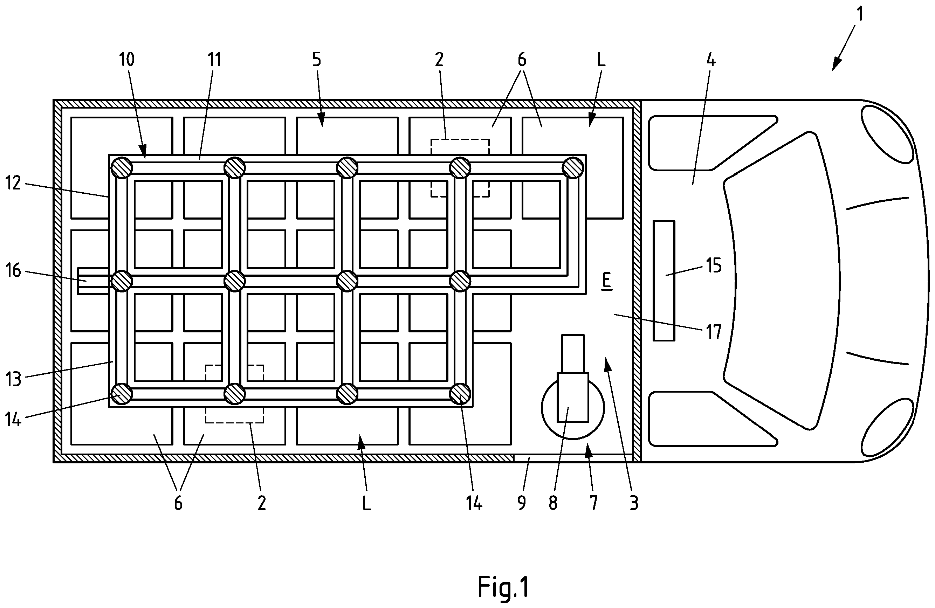

In der Fig. 1 ist ein Zustellfahrzeug 1 zum Abliefern oder Zustellen von Sendungen 2 mit einem Laderaum 3 und einer Fahrerkabine 4 dargestellt. Ein Fahrer ist jedoch nicht zwingend erforderlich. Das Zustellfahrzeug 1 kann auch für das autonome Abfahren einer Zustellroute ausgelegt sein. Die Fahrerkabine 4 dient dann lediglich in Ausnahmesituationen dem Führen des Zustellfahrzeugs 1 durch einen Fahrer, etwa im Falle einer Störung oder einer besonderen Verkehrssituation.

Im Laderaum 3 ist ein Regalsystem 5 mit mehreren Regalen 6 vorgesehen, die Regale 6 sind jeweils in einer Lagerstellung L angeordnet. Zudem stellt das Regalsystem 5 noch eine Entnahmestellung E bereit, in der jedoch kein Regal 6 vorgesehen ist. In der Entnahmestellung E kann aus einem Regal 6 eine Sendung 2 entnommen werden, wozu eine Entnahmeeinrichtung 7 mit einem Roboterarm 8 vorgesehen ist. Der Roboterarm 8 ist so ausgebildet, dass er auf unterschiedlichen Höhen in das jeweilige Regal 6 eingreifen kann, um die auf unterschiedlichen Höhen in den Regalen 6 vorgesehenen Sendungen 2 entnehmen zu können. Die Sendungen 2 können zudem von dem Roboterarm 8 durch eine verschließbare Öffnung 9 des Laderaums 3 nach außen bezogen auf das Zustellfahrzeug 1 bewegt und dort abgegeben, abgeliefert oder zugestellt werden. Dies kann grundsätzlich auf unterschiedliche Art erfolgen, ist vorliegend aber nicht dargestellt.

Die Regale 6 sind im Regalsystem 5 über eine Verstelleinrichtung 10 verstellbar vorgesehen. Die Verstelleinrichtung 10 umfasst dabei insbesondere die Bauteile des Regalsystems 5, die zusammen das Verstellen der Regale 6 erlauben, also beispielsweise die Bauteile, die hinreichend für das Verstellen der Regale sind. Beim dargestellten und insoweit bevorzugten Regalsystem 5 und bei der dargestellten und insoweit bevorzugten Verstelleinrichtung 10 können alle Regale 6 in Längsrichtung des Zustellfahrzeugs 1 und quer zum Zustellfahrzeug 1 also in zwei zueinander senkrechten Richtungen verstellt werden. Dazu weist die dargestellte und insoweit bevorzugte Verstelleinrichtung 10 eine Führungseinrichtung 11 umfassend ein Schienensystem 12 auf. Das Schienensystem 12 kann nach unten geöffnete C-Schienen 13 aufweisen, in denen Führungselemente 14 der Regale 6 geführt sind. Die Führungselemente 14 können breiter sein als die untere Öffnung der C-Schienen 13. Damit sind die Führungselemente 14 ähnlich Nutensteinen im Schienensystem 12 gehalten. Die Führungselemente 14 des dargestellten und insoweit bevorzugten Regalsystems 5 sind scheibenförmig oder zylindrisch ausgebildet. Grundsätzlich könnten die Führungselemente 14 aber auch einen rechteckigen oder quadratischen Querschnitt in einer durch die Führungseinrichtung 14 definierten Ebene aufweisen. Damit das Verstellen ohne großen Kraftaufwand möglich ist, können die Führungselemente 14 der Regale 6 über Rollen in den Schienen 13 geführt sein. Die Führungselemente 14 sind dabei so dimensioniert, dass das Regal 6 sowohl entlang der in Längsrichtung des Zustellfahrzeugs 1 ausgerichteten Schienen 13 der Führungseinrichtung 11 als auch entlang der quer zum Zustellfahrzeug 1 ausgerichteten Schienen 13 verstellt werden kann. Das Verstellen der Regale 6 wird über die in das Zustellfahrzeug 1 integrierte Steuereinrichtung 15 gesteuert.

Zudem ist an dem hinteren Ende der Führungseinrichtung 11 eine Aufnahme/AbgabeEinrichtung 16 zum Aufnehmen von, insbesondere mit Sendungen 2 versehenen, Regalen 6 und/oder zum Abgeben von, bedarfsweise Sendungen 2 aufweisenden, Regalen 6 des Regalsystems 5. Die Aufnahme/Abgabe-Einrichtung 16 und mithin die Führungseinrichtung 11 kann geöffnet werden, um Führungselemente 14 von Regalen 6 in den Schienen 13 aufzunehmen oder aus den Schienen 13 zu entnehmen. Die Aufnahme/Abgabe-Einrichtung 16 kann auch geschlossen werden, um ein versehentliches Herausrutschen von Regalen 6 aus dem Regalsystem 5 über die Aufnahme/Abgabe-Einrichtung 16 oder ein Verhaken von Regalen 6 des Regalsystems 5 in der Aufnahme/Abgabe-Einrichtung 16 zu vermeiden.

Beim dargestellten und insoweit bevorzugten Zustellfahrzeug 1 ist in den Ladeboden 17 des Laderaums 3 eine Transporteinrichtung mit mehreren Antrieben eingelassen, die das Verstellen der Regale 6 im Regalsystem 5 bewirkt. Die Transporteinrichtung ist in der schematischen Draufsicht der Fig. 1 nicht dargestellt. Grundsätzlich könnte aber auch oberhalb der Regale 6 eine Transporteinrichtung vorgesehen sein, die beispielsweise an die Verstelleinrichtung 10 bzw. an die Führungseinrichtung 11 angebunden sein könnte. Eine weitere Option bestünde darin, die Transporteinrichtung an die Regale 6 zu koppeln, so dass die Regale 6 separate Antriebe aufweisen, die zum Verfahren der Regale 6 beispielsweise am Ladeboden 17 oder der Führungseinrichtung 11 angreifen könnten.

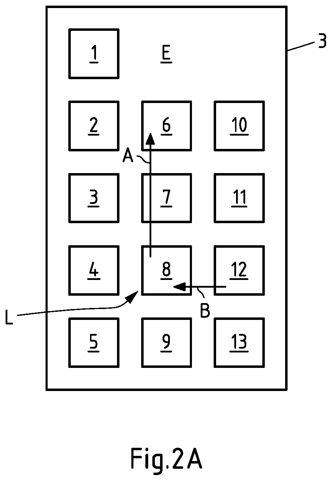

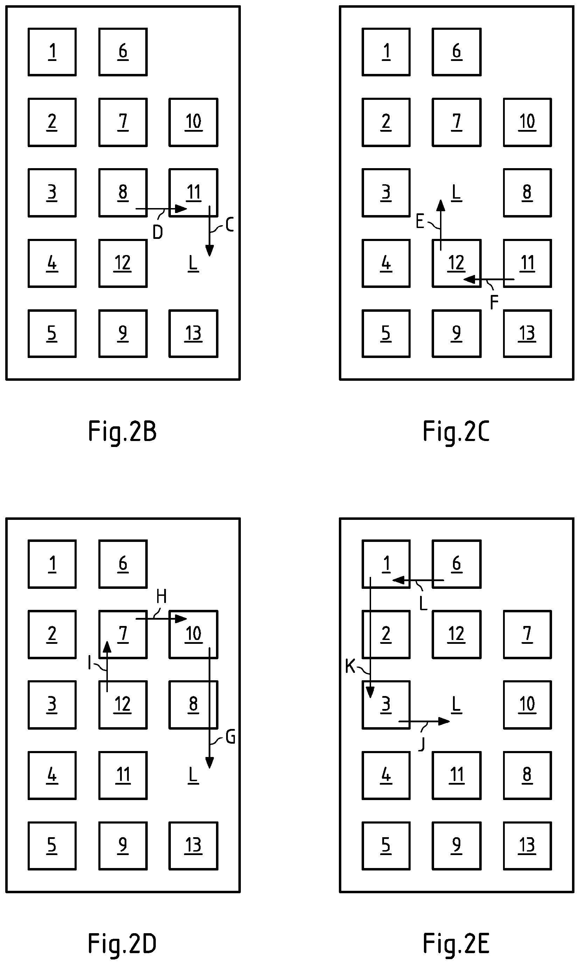

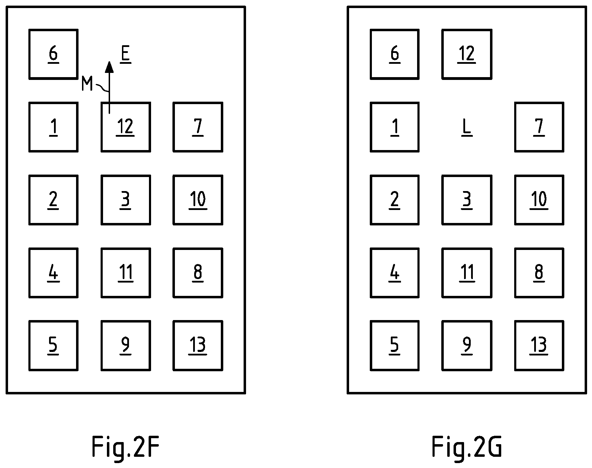

In den Fig. 2A-G ist der Laderaum 3 des Zustellfahrzeugs 1 aus Fig. 1 mit den von 1 bis 12 durchnummerierten Regalen 6 des Regalsystems 5 in sehr schematischer Ansicht dargestellt und zwar in unterschiedlichen Stellungen entlang einer Abfolge von Verstellschritten zum Verstellen des Regals Nr. 12 in die Entnahmestellung E. In der Fig. 2A sind die Regale 6 in einer Ausgangsstellung dargestellt. In einem ersten Verstellschritt entlang des Pfeils A werden die Regale Nr. 6-8 nach vorne in Richtung der Entnahmestellung E verstellt. Dadurch wird die Ladestellung L links neben dem Regal Nr. 12 frei, das in dem durch den Pfeil B gekennzeichneten Verstellschritt nach links in die freie Lagerstellung L verstellt wird, so dass an der ursprünglichen Position des Regals Nr. 12 eine freie Lagerstellung L entsteht. Entsprechend der Darstellung gemäß Fig. 2B wird das Regal Nr. 11 entlang des Pfeils C in die nun leere Lagerstellung L und das Regal Nr. 8 entlang des Pfeils D in die dabei frei werdende Lagerstellung L an der vorherigen Position des Regals Nr. 11 verstellt. Nun kann, wie dies in der Fig. 2C dargestellt ist, das Regal Nr. 12 gemäß dem Pfeil E einen weiteren Schritt nach vorne in Richtung der Entnahmestellung E verstellt werden. Um eine weitere Leerstelle in Form einer unbesetzten Lagerstellung L zwischen dem Regal Nr. 12 und der Entnahmestellung E zu schaffen, wird nun entlang des Pfeils F das Regal Nr. 11 nach links an die vorherige Position des Regals Nr. 12 verstellt. Entsprechend der Darstellung gemäß Fig. 2D werden nun die Regale Nr. 8 und 10 entlang des Pfeils G nach hinten verstellt, wodurch sich am vorderen Ende der rechten in Längsrichtung des Zustellfahrzeugs 1 ausgerichteten Reihe von Lagerstellungen L eine freie Lagerstellung L ergibt. Diese freie Lagerstellung L wird durch das Regal Nr. 7 durch Verstellen nach rechts gemäß Pfeil H gefüllt. Die dabei entstehende Leerstelle L wird gemäß Pfeil I durch das Verstellen des Regals Nr. 12 nach vorne in Richtung der Entnahmestellung E gefüllt. Nun werden, wie dies in der Fig. 2E dargestellt ist, nacheinander das Regal Nr. 3 gemäß dem Pfeil J nach rechts, die Regale Nr. 1 und 6 gemäß Pfeil K nach hinten und das Regal Nr. 6 nach links gemäß Pfeil L verstellt, so dass, wie dies in der Fig. 2F dargestellt ist, die Entnahmestellung E für das Aufnehmen des Regals Nr. 12 entlang des Pfeils M frei ist.

Anschließend, in der Stellung gemäß Fig. 2G kann eine auf einem Segment des Regals Nr. 12 vorgesehene Sendung 2 von der Entnahmeeinrichtung aus dem Regal 6 entnommen und nach außen bezogen auf das Zustellfahrzeug 1 verbracht werden.

Dies geschieht vorzugsweise autonom, also ohne ein Eingreifen des Menschen. Die Sendung 2 kann nun an dem dafür vorgesehenen Ort entlang der Zustellroute zugestellt bzw. abgegeben werden. Hierfür gibt es verschiedene Möglichkeiten. Eine bevorzugte Möglichkeit ist das Einlegen der Sendung 2 in einen dafür vorgesehenen Kasten, etwa einen Briefkasten, einen Paketkasten oder eine Packstation. Die Sendung 2 kann aber auch von einer Person entgegengenommen werden oder von der Entnahmeeinrichtung 7 an ein Regal 6 außerhalb des Zustellfahrzeugs 1 abgegeben werden. Die genaue Art der Übergabe spielt vorliegend nur eine untergeordnete Rolle und wird daher nicht im Einzelnen beschrieben.

Das zuvor beschriebene Verstellen des Regals Nr. 12 in die Entnahmestellung E ist recht aufwendig. So bedarf es einer recht aufwendigen Verstelleinrichtung 5, insbesondere einer aufwendigen Führungseinrichtung 11. Die dargestellte und insoweit bevorzugte Führungseinrichtung 11 weist eine ganze Reihe von Schienen 11 auf, die alle untereinander verbunden sind. Dazu sind eine ganze Reihe von T-Stücken und Kreuzungen erforderlich. Neben der Führungseinrichtung 11 ist bedarfsweise aber auch eine sehr aufwendige Transporteinrichtung erforderlich. Diese muss nämlich dafür Sorge tragen, dass jedes Regal 6 des Regalsystems 5 bedarfsweise einzeln in zwei, drei oder vier Richtungen verschoben werden kann, je nachdem an welcher Position sich das Regal 6 im Regalsystem 5 befindet. Zwei Richtungen können dabei beispielsweise entgegengesetzt zueinander, etwa an einem geraden Schienenstück, oder über Eck verlaufen, etwa in einer Ecke der Führungseinrichtung 11. Bei der dargestellten und insoweit bevorzugten Führungseinrichtung 11 kann ein Regal an einem T-Stück typicherweise in drei Richtungen und an einer Kreuzung typischerweise in vier Richtungen verstellt werden. Der entsprechende apparative Aufwand ermöglicht jedoch eine sehr flexible Verstellung der Regale 6 und/oder die Aufnahme von sehr vielen Regalen 6 im Regalsystem 5, die dennoch sehr schnell in die wenigstens eine Entnahmestellung E verstellt werden können. Die Regale 6 können wenigstens in nahezu optimaler Weise verstellt werden, da das Regalsystem 5 sehr viele Freiheitsgrade für das Verstellen der Regale 6 im Regalsystem 5 bereitstellt.

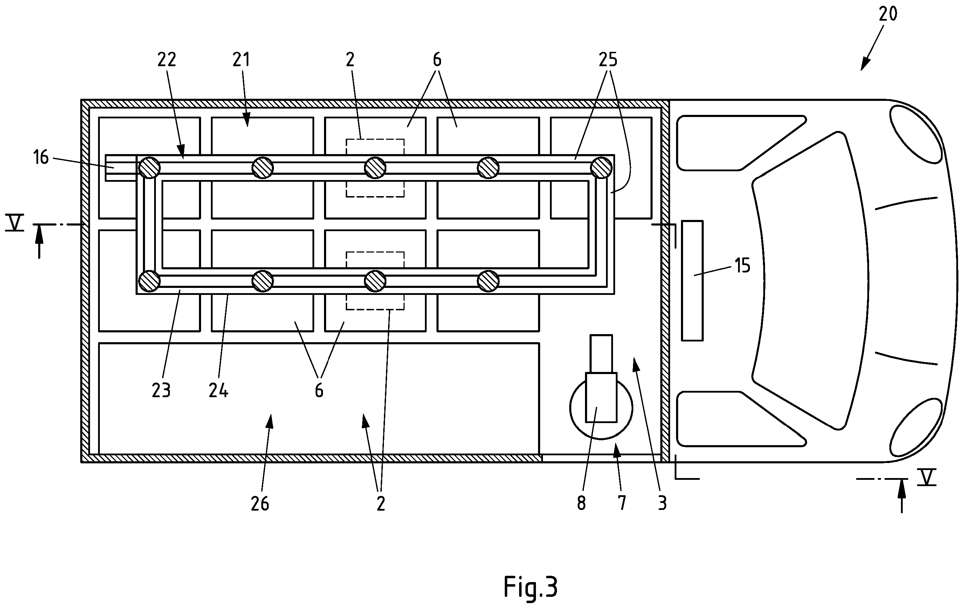

Einfacher wird das Verstellen, wenn die Lagerstellungen L entsprechend des in der Fig. 3 dargestellten Zustellfahrzeugs 20 lediglich in Zweierreihen angeordnet sind, und zwar insbesondere für den Fall, dass ebenso viele Regale 6 im Regalsystem 21 aufgenommen sind wie Lagerstellungen L vorhanden sind. Dann können die Regale 6 im Kreis bzw. entlang eines Rechtecks verfahren werden, bis das gewünschte Regal 6 in der Entnahmestellung E angekommen ist.

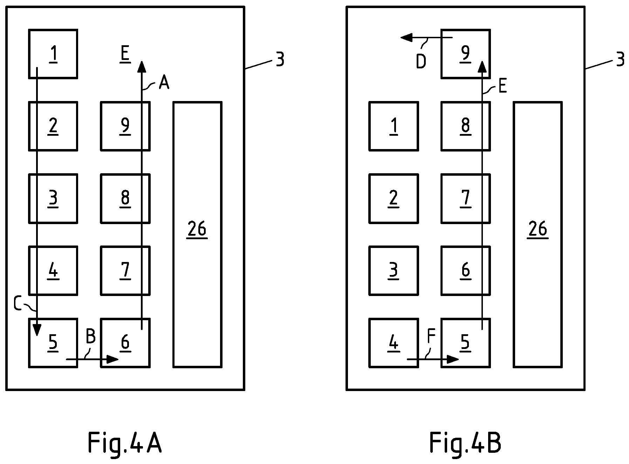

Das entsprechende schrittweise Verstellen der mit 1 bis 9 durchnummerieren Regale wird durch die in der Fig. 4A dargestellten Pfeile A-C symbolisiert. Durch diese Verstellschritte gelangen die Regale 6 in die in der Fig. 4B dargestellten Positionen. Nun können die Verstellschritte entsprechend der Pfeile D-F erfolgen. Danach kann wiederum ein Verstellschritt gemäß Pfeil C aus Fig. 3A erfolgen. Die Verstellschritte werden mithin hintereinander solange durchgeführt, bis das gewünschte Regal 6 in der Entnahmestellung E vorgesehen ist. Die Regale 6 werden solange der Reihe nach an der Entnahmestellung E vorbei geführt.

Da das Verstellen der Regale 6 einfacher ist und die Regale 6 beim Verstellen auf einer geschlossenen Kreisbahn, die jedoch nicht kreisförmig ausgebildet sein muss, geführt werden, bedarf es auch nur einer einfacheren Verstelleinrichtung 22 und einer einfacheren Führungseinrichtung 23. Das in der Fig. 3 dargestellte und insoweit bevorzugte Schienensystem 24 der Führungseinrichtung 23 kommt dann ganz ohne T-Stücke und Kreuzungen aus. Dementsprechend sind auch deutlich weniger quer verlaufende Schienen 25 zum Verbinden der sich in Längsrichtung erstreckenden Schienen 25 notwendig. Die Führungseinrichtung 23 weist lediglich zwei sich in Längsrichtung erstreckende Schienen 25 und zwei diese Schienen 25 zu beiden Längsenden quer miteinander verbindende Schienen 25 auf. Bei dem in der Fig. 3 dargestellten Zustellfahrzeug 20 ist der Laderraum 3 nur zum Teil durch das Regalsystem 21 ausgefüllt. Dies könnte beispielsweise unter prinzipieller Beibehaltung der Verstelleinrichtung 22 einfach durch die Verwendung breiterer Regale 6 geändert werden. Beim dargestellten und insoweit bevorzugten Regalsystem 21 wird stattdessen neben dem Regalsystem 21 weiterer Lagerraum 26 für Sendungen 2 geschaffen, die beispielsweise nicht effizient in den Regalen 6 aufgenommen werden können, weil die Sendungen 2 beispielsweise sehr groß und/oder sehr klein sind. Bei dem dargestellten und insoweit bevorzugten Zustellfahrzeug 20 werden in dem zusätzlichen Lagerraum 26 insbesondere Briefsendungen gelagert. Dies ist jedoch nicht zwingend der Fall.

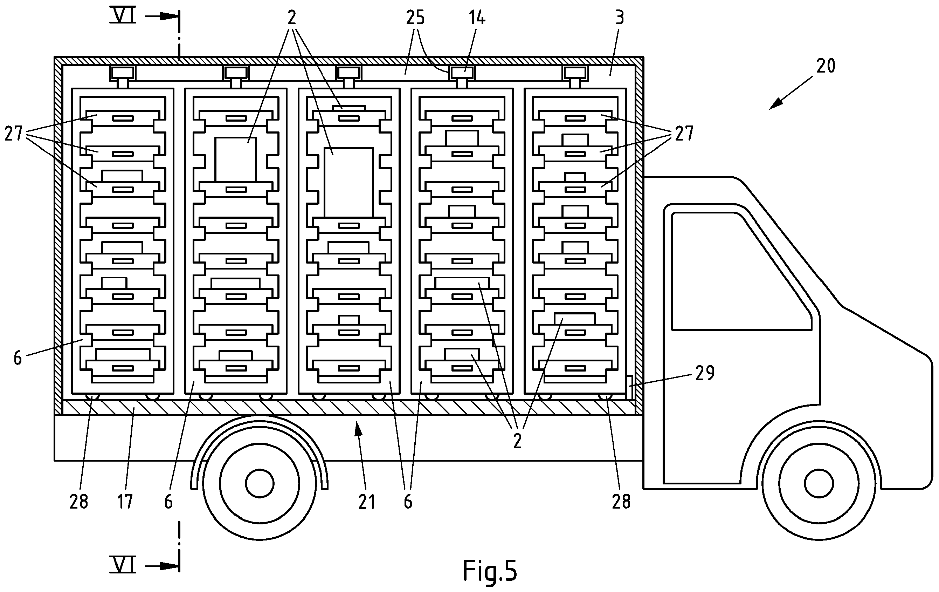

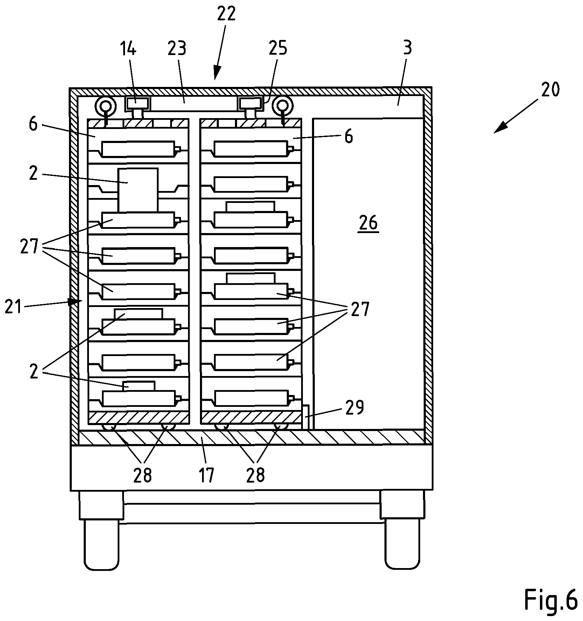

In der Fig. 5 ist das Zustellfahrzeug 20 gemäß Fig. 3 in einer Schnittansicht entlang einer Schnittebene in Längsrichtung des Zustellfahrzeugs 20 und in der Fig. 6 in einer Schnittansicht von hinten entlang einer Schnittebene quer zum Zustellfahrzeug 20 dargestellt. Die Regale 6 des dargestellten und insoweit bevorzugten Regalsystems 21 weisen über ihre Höhe verschiedene Segmente im Sinne von Regalböden auf, wobei in den Segmenten Trägerelemente 27 aufgenommen sind. Durch den Formschluss werden die Trägerelemente 27 auf der entsprechenden Höhe sowie in Längs- und Querrichtung des Zustellfahrzeugs 20 auf dem Regal 6 gehalten. An einzelnen Stellen der Regale 6 können Trägerelemente 27 fehlen, um auf den jeweils darunter liegenden Trägerelementen 27 eine höhere Sendung 2 vorzusehen. Die Trägerelemente 27 können, wenn sich das Regal 6 in der Entnahmestellung befindet, von der Entnahmeeinrichtung 7, insbesondere mittels eines Roboterarms 8 untergriffen, leicht angehoben und aus dem Regal 6 gezogen werden. Anschließend erfolgt das Abgeben des Trägerelements 27 mitsamt der Sendung 2 nach außen, um die Zustellung der Sendung 2 zu bewirken. Das Trägerelement 27 wird dabei bedarfsweise zurückgelassen oder nach dem Abliefern der Sendung 2 wieder zurück in das Regal 6 geschoben. Es können auch außerhalb des Zustellfahrzeugs 20 bereitgehaltene mit Sendungen 2 versehene Trägerelemente 27 mit Hilfe der Entnahmeeinrichtung 7 in das Zustellfahrzeug 20 überführt und in die Regale 6 eingebracht werden.

Die in den Fig. 5 und 6 dargestellten Regale 6 weisen am unteren Ende drehbare Kugeln oder Rollen 28 auf, mit denen die Regale 6 in Längsrichtung und in Querrichtung bezogen auf das Zustellfahrzeug 20 auf dem Ladeboden 17 verfahren werden können. Angetrieben werden die Regale 6 bei dem dargestellten und insoweit bevorzugten Regalsystem 21 durch eine eventuell teilweise im Ladeboden 17 angeordnete Transporteinrichtung. In den Fig. 5 und 6 sind von der Transporteinrichtung lediglich oberhalb des Ladebodens 17 angeordnete Arme 29 dargestellt, die formschlüssig an den angrenzenden Regalen 6 angreifen und diese verschieben können.

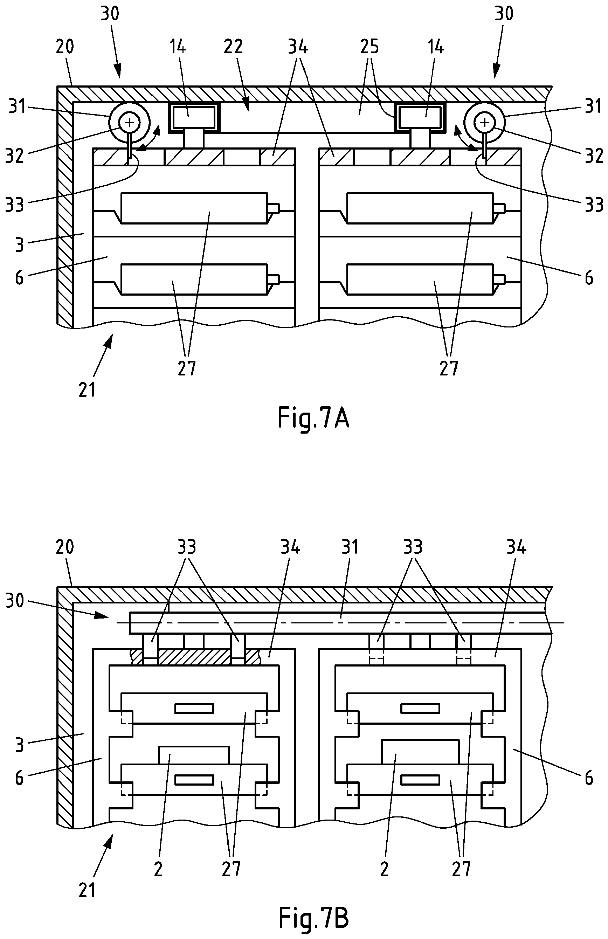

In der Fig. 7A-B ist ein weiteres Detail des Regalsystems 21 gemäß der Fig. 6 dargestellt, und zwar gemäß Fig. 7A in einer Ansicht von hinten und gemäß Fig. 7B in einer Seitenansicht. In der Fig. 7A ist ein Teil der Schienen 25 der Führungseinrichtung 23 in einem Schnitt dargestellt. Die Schienen 25 weisen ein nach unten offenes C-Profil auf, in dem die Führungselemente 14 der Regale 6 gehalten sind. Die Führungselemente 14 sind breiter als die untere Öffnung der C-Schienen 25. Die Führungselemente 14 können bedarfsweise über Rollen in den C-Schienen 25 geführt sein, wobei die Rollen an den Führungselementen 14 vorgesehen sein und an Laufflächen der C-Schienen 25 abrollen können.

Das Regalsystem 21 weist zudem eine der Führungseinrichtung 23 zugeordnete Arretiereinrichtung 30 zum Arretieren der Regale 6 im Regalsystem 21 beispielsweise während der Fahrt des Zustellfahrzeugs 20. Die Arretiereinrichtung 30 umfasst dabei von einem Antrieb 31 angetriebene Wellen 32, an denen eine Reihe von radial abstehenden Fingerelementen 33 angeordnet sind. Über den Antrieb 31 können die Wellen 32 um deren Längsachsen gedreht werden, wobei die Fingerelemente 33 von einer nach unten weisenden Arretierstellung in eine zur Seite weisende Freigabestellung und zurück geschwenkt werden können. In der Freigabestellung behindern die Fingerelemente 33 der Arretiereinrichtung 30 das Verstellen der Regale 6 nicht. In der Arretierstellung greifen die Fingerelemente 33 aber formschlüssig in einem Rahmen 34 des darunter angeordneten Regals 6 ein. Die Fingerelemente 33 der Arretiereinrichtung 30 und die Rahmen 34 der Regale 6 bilden dann einen Formschluss, der die Regale 6 in Position hält. Andere Arretiereinrichtungen sind jedoch denkbar. So könnten beispielsweise anstelle von Fingerelementen 33 auch Nockenelemente vorgesehen sein, die dann nicht wie die Fingerelemente geschwenkt, sondern über ein Zahnrad oder eine Zahnstange infolge einer Drehung der Welle 32 rauf und runter bewegt werden können. In der unteren Stellung können die Nockenelemente reibschlüssig an dem darunter vorgesehenen Regal 6 angreifen und/oder formschlüssig in das darunter vorgesehene Regal 6 oder einen entsprechenden Rahmen 34 des Regals eingreifen. Es sind auch Arretiereinrichtungen in Form einer Arretierplatte möglich die insgesamt abgesenkt werden kann und danach formschlüssig in die Rahmen 34 der Regale 6 des Regalsystems 21 eingreifen kann. Grundsätzlich ist eine kraftschlüssige und/oder eine formschlüssige Arretierung wenigstens einzelner Regale 6 möglich.

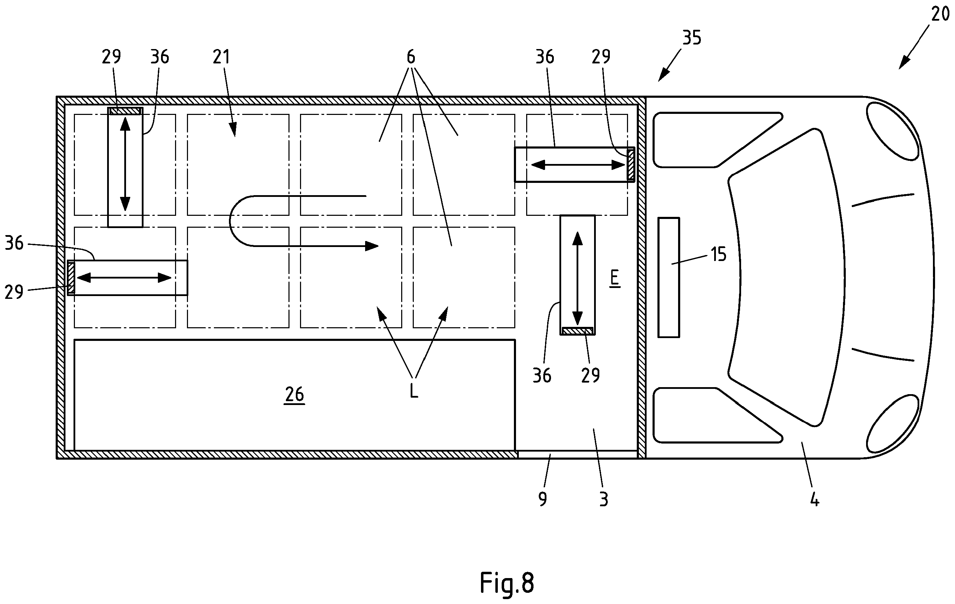

In der Fig. 8 ist die Transporteinrichtung 35 des Zustellfahrzeugs 20 gemäß Fig. 3 zum Verstellen der Regale 6 des Regalsystems 21 entlang der Führungseinrichtung 23 dargestellt. Bei diesem Zustellfahrzeug 20 werden die Regale 6 lediglich entlang einer geschlossenen rechteckigen Bahn im Gegenuhrzeigersinn verstellt, die durch den Pfeil angedeutet ist. Zudem ist bei dem dargestellten und insoweit bevorzugten Regalsystem 21 jeweils nur eine Lagerstellung L oder die eine Entnahmestellung E unbesetzt. Links hinten ist eine Antriebseinheit 36 mit einem Antrieb und einem seitlich verstellbaren Arm 29 zum seitlichen Angreifen an einem Regal 6 vorgesehen. Die Antriebseinheit 36 kann das entsprechende Regal 6 aus der Lagerstellung L links hinten in die Lagerstellung L rechts hinten verschieben. Hinten rechts ist eine Antriebseinheit 36 mit einem in Längsrichtung verstellbaren Arm 29 vorgesehen, um ein Regal 6 aus der hinteren rechten Lagerstellung L in die davor liegende Lagerstellung L zu verstellen. Die vor diesem Regal 6 angeordneten Regale 6 werden dabei mit nach vorne geschoben, und zwar ebenfalls um eine Lagerstellung L. Dazu liegen die benachbarten Regale 6 des dargestellten und insoweit bevorzugten Regalsystems 21 wenigstens im Wesentlichen aneinander an, so dass in einfacher Weise mehrere Regale 6 gemeinsam über eine einzige Antriebseinheit 36 verstellt werden können. Die Transporteinheit 36 links vorne dient wiederum dem Verschieben eines dort vorgesehenen Regals 6 in eine Position nach links, wozu die Transporteinheit 36 einen rechts angeordneten mit einem Regal 6 in Kontakt kommenden Arm 29 aufweist. Zum Verstellen von Regalen 6 der linken Reihe von Regalen 6 in Längsrichtung des Zustellfahrzeugs 20 um etwa eine Regalbreite dient die Antriebseinheit 36 links vorne, die ebenfalls dazu mit einem Arm 29 am Regal 6 vorne links angreifen kann. Mit diesem Regal 6 werden auch die weiteren in der linken Reihe von Regalen 6 angeordneten Regale 6 nach hinten verstellt, weshalb die Regale 6 wenigstens in dieser Richtung wenigstens im Wesentlichen aneinander anliegen.

Bei dem Regalsystem 5 gemäß Fig. 1 und zur Verwirklichung der Verstellschritte gemäß Fig. 2A-G sind dagegen deutlich mehr Antriebseinheiten 36 der beschriebenen Art erforderlich, die dann auch nicht bloß in den Ecken des Regalsystems 5 angeordnet sein können. Grundsätzlich bestehen aber auch hier unterschiedliche Möglichkeiten zur Ausgestaltung der Antriebseinrichtung 35.

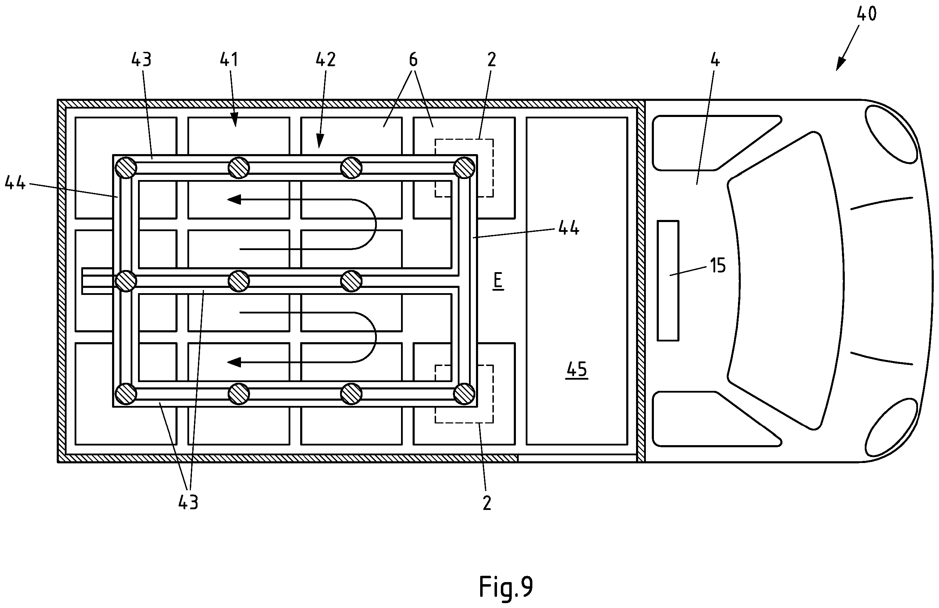

In der Fig. 9 ist ein Zustellfahrzeug 40 mit einem Regalsystem 41 dargestellt, dass einen Kompromiss zwischen den Regalsystemen 5,21 der Zustellfahrzeuge 1,20 gemäß den Fig. 1 und 3 dargestellt. Das Regalsystem 41 weist eine Führungseinrichtung 42 mit drei parallelen Schienen 43 in Längsrichtung auf. Die Längsenden der Schienen 43 sind durch quer zum Zustellfahrzeug 40 verlaufende Schienen 44 verbunden. Die Führungseinrichtung 42 bildet somit zwei parallele geschlossene Kreisbahnen, die wiederum nicht kreisförmig ausgebildet sein müssen, sondern vorliegend rechteckig ausgebildet sind. Je nachdem welches Regal 6 in die Entnahmestellung E verstellt werden soll, werden entweder die Regale 6 der linken Kreisbahn entlang der Kreisbahn verstellt oder es werden die Regale 6 der rechten Kreisbahn entlang der rechten Kreisbahn verstellt, wie dies durch die Pfeile symbolisiert ist. Dies geschieht jeweils so lange, bis das gewünschte Regal 6 in der Entnahmestellung E angeordnet ist. Die Entnahmeeinrichtung E ist dabei vor dem Regalsystem 41 angeordnet, was jedoch nicht zwingend ist. Die Entnahmeeinrichtung 45 kann zudem ebenfalls einen Roboterarm 8 aufweisen, um die Trägerelemente 27 der Regale 6 aus den Regalen 6 zu entnehmen.

## Patentansprüche

1. Zustellfahrzeug (1) zum, insbesondere autonomen, Abliefern von Sendungen (2) an unterschiedlichen Orten entlang einer Zustellroute, mit einem Laderaum (3) umfassend ein Regalsystem (5,21,41) für Sendungen (2) aufweisende Regale (6), wobei das Regalsystem (5,21,41) zur Aufnahme von Regalen (6) in einer Mehrzahl von Lagerstellungen (L) zum Bereithalten der Regale (6) und in wenigstens einer Entnahmestellung (E) für das Entnehmen von Sendungen (2) aus den Regalen (6) ausgebildet ist und wobei das Regalsystem (5,21,41) wenigstens eine Verstelleinrichtung (10,22) zum Verstellen, insbesondere Verschieben, der Regale (6) des Regalsystems (5,21,41) jeweils zwischen mehreren Lagerstellungen (L) und der wenigstens einen Entnahmestellung (E) aufweist,
wobei die wenigstens eine Verstelleinrichtung (10,22) dazu ausgebildet ist, Regale (6) jeweils schrittweise nacheinander in unterschiedliche Richtungen zu verstellen, um jeweils das Regal (6) mit der als nächstes zu übergebenden Sendung (2) in die Entnahmestellung (E) zu verstellen,
**dadurch gekennzeichnet, dass** das Regalsystem (5,21,41) ein Raster mit einer Leerstelle ohne Regal (6) nach Art eines Schiebepuzzles aufweist und dass ein an die Leerstelle angrenzendes Regal (6) des Regalsystems (5,21,41) in Längsrichtung oder in Querrichtung bezogen auf das Raster auf die Leerstelle verschiebbar vorgesehen ist.

2. Zustellfahrzeug nach Anspruch 1
**dadurch gekennzeichnet, dass**
die Lagerstellungen (L) des Regalsystems (5,21,41) in parallel oder senkrecht zueinander verlaufenden Reihen angeordnet sind und/oder dass die Anzahl der Regale (6) des Regalsystems (5,21,41) maximal, vorzugsweise wenigstens im Wesentlichen, der Anzahl der Lagerstellungen (L) entspricht und/oder dass die Regale (6) des Regalsystems (5,21,41) wenigstens im Wesentlichen gleichartig ausgebildet sind.

3. Zustellfahrzeug nach Anspruch 1 oder 2,
**dadurch gekennzeichnet, dass**
die Verstelleinrichtung (10,22) zum Verstellen, insbesondere zum Verschieben, wenigstens eines Regals (6), vorzugsweise jedes Regal (6) des Regalsystems (5,21,41), in jede Lagerstellung (L) sowie in die Entnahmestellung (E) ausgebildet ist und/oder dass die Verstelleinrichtung (10,22) eine Führungseinrichtung (11,23,42) vorzugsweise umfassend ein Schienensystem (12,24) zum Führen der Regale (6) im Regalsystem (5,21,41) zwischen mehreren Lagerstellungen (L) und der Entnahmestellung (E) ausweift und/oder dass die Verstelleinrichtung (10,22) eine Transporteinrichtung (35) zum Transportieren der Regale (6) von einer Lagerstellung (L) in eine andere Lagerstellung (L) und von einer Lagerstellung (L) in die Entnahmestellung (E), insbesondere entlang der Führungseinrichtung (11,23,42), aufweist.

4. Zustellfahrzeug nach Anspruch 3,
**dadurch gekennzeichnet, dass**
die Transporteinrichtung (35), insbesondere mit wenigstens einem Arm (29), zum formschlüssigen Angreifen an wenigstens einem Regal (6) ausgebildet ist und/oder dass die Transporteinrichtung (35) wenigstens einen Antrieb, insbesondere Linearantrieb, zum Transportieren wenigstens eines Regals (6), insbesondere mittels des wenigstens einen Arms (29), in wenigstens einer Richtung aufweist.

5. Zustellfahrzeug nach einem der Ansprüche 1 bis 4,
**dadurch gekennzeichnet, dass**
eine Steuereinrichtung (15) zur Steuerung der Verstelleinrichtung (10,22), insbesondere der Transporteinrichtung (35), für das Verstellen, insbesondere Verschieben, der Regale (6) zueinander und, vorzugsweise, für das Verstellen des Regals (6) mit der als nächstes zu entnehmenden Sendung (2) aus einer Lagerstellung (L) in die Entnahmestellung (E) vorgesehen ist.

6. Zustellfahrzeug nach einem der Ansprüche 1 bis 5,
**dadurch gekennzeichnet, dass**
die Regale (6) Segmente zum, insbesondere formschlüssigen, Aufnahmen von Sendungen (2) aufweisen und, vorzugsweise, dass die Regale (6) aus den Regalen (6) entnehmbare Trägerelemente (27), insbesondere Boxen, zur Aufnahme von Sendungen (2), aufweisen.

7. Zustellfahrzeug nach einem der Ansprüche 1 bis 6,
**dadurch gekennzeichnet, dass**
eine Entnahmeeinrichtung (7), vorzugsweise umfassend einen Roboterarm (8), zur Entnahme einer Sendung (2), insbesondere eines Trägerelements (27), aus dem sich in der Entnahmestellung (E) befindenden Regal (6) vorgesehen ist und, vorzugsweise, dass die Entnahmeeinrichtung (E) zur Übergabe einer Sendung (2), insbesondere eines Trägerelements (27), in das sich in der Entnahmestellung (E) befindende Regal (6) vorgesehen ist.

8. Zustellfahrzeug nach einem der Ansprüche 1 bis 7,
**dadurch gekennzeichnet, dass**
einzelnen Regalen (6), vorzugsweise jedem Regal (6), eine Arretiereinrichtung (30) zum Arretieren des jeweiligen Regals (6) in der Lagerstellung (L) und, vorzugswiese in der Entnahmestellung (E), zugeordnet ist.

9. Zustellfahrzeug nach einem der Ansprüche 1 bis 8,
**dadurch gekennzeichnet, dass**
das Regalsystem (5,21,41) wenigstens eine Aufnahmeeinrichtung (16) zum Aufnehmen von, insbesondere mit Sendungen (2) versehenen, Regalen (6) und/oder eine Abgabeeinrichtung (16) zum Abgeben von, bedarfsweise Sendungen (2) aufweisenden, Regalen (6) des Regalsystems (5,21,41) aufweist.

10. Verfahren zum, insbesondere autonomen, Abliefern von Sendungen (2) an unterschiedlichen Orten entlang einer Zustellroute mit einem Zustellfahrzeug (1,20,40), vorzugsweise nach einem der Ansprüche 1 bis 9, mit einem Laderaum (3) umfassend ein Regalsystem (5,21,41) mit Regalen (6) zur Aufnahme von Sendungen (2) in einer Mehrzahl von Lagerstellungen (L) und wenigstens einer Entnahmestellung (E), wobei das Regalsystem (5,21,41) ein Raster mit einer Leerstelle ohne Regal (6) nach Art eines Schiebepuzzles aufweist und wobei ein an die Leerstelle angrenzendes Regal (6) des Regalsystems (5,21,41) in Längsrichtung oder in Querrichtung bezogen auf das Raster auf die Leerstelle verschiebbar vorgesehen ist,
- bei dem das die als nächstes zu entnehmende Sendung (2) aufweisende Regal (6) über eine Verstelleinrichtung (10,22) aus einer Lagerstellung (L) in die Entnahmestellung (E) verstellt, insbesondere verschoben, wird,
- bei dem andere Regale (6) des Regalsystems (5,21,41) derart verstellt werden, dass die anderen Regale (6) für das Verstellen des einen Regals (6) in die Entnahmestellung (E), insbesondere schrittweise, wenigstens eine Lagerstellung (L) und, vorzugsweise, die Entnahmestellung (E), freigeben,
- bei dem Regale (6) mittels der Verstelleinrichtung (10,22) jeweils schrittweise nacheinander in unterschiedliche Richtungen verstellt werden, um jeweils das Regal (6) mit der als nächstes zu übergebenden Sendung (2) in die Entnahmestellung (E) zu verstellen und
- bei dem ein an die Leerstelle angrenzendes Regal (6) des Regalsystems (5,21,41) in Längsrichtung oder in Querrichtung bezogen auf das Raster auf die Leerstelle verschoben wird.

11. Verfahren nach Anspruch 10,
bei dem, insbesondere alle, Regale (6) mittels der Verstelleinrichtung (10,22) jeweils schrittweise nacheinander in unterschiedliche Richtungen längs und quer zum Zustellfahrzeug (1,20,40) verstellt, insbesondere verschoben, werden, um jeweils das Regal (6) mit der als nächstes zu übergebenden Sendung (2) in die Entnahmestellung (E) zu verstellen, insbesondere zu verschieben.

12. Verfahren nach Anspruch 10 oder 11,
- bei dem, insbesondere schrittweise, wenigstens eine Lagerstellung (L) durch das Verstellen, insbesondere Verschieben, von Regalen (6) freigegeben wird und
- bei dem, insbesondere schrittweise, das Regal (6) mit der als nächstes zu entnehmenden Sendung (2) und/oder ein anderes Regal (6) in die wenigstens eine freigegebene Lagerstellung (L) verstellt, insbesondere verschoben, wird und
- bei dem, vorzugsweise, die zuvor beschriebenen Schritte des Freigebens und Belegens von Lagerstellungen (L) wiederholt durchgeführt werden, insbesondere bis das Regal (6) mit der als nächstes zu entnehmenden Sendung (2) in einer Lagerstellung (L) angeordnet ist, von der das Regal (6) direkt in die Entnahmestellung (E) verstellt, insbesondere verschoben, werden kann.

13. Verfahren nach einem der Ansprüche 10 bis 12,
- bei dem eine Steuereinrichtung (15) in Abhängigkeit wenigstens von der Anordnung des Regals (6) mit der als nächstes zu entnehmenden Sendung (2) eine zweckmäßige Abfolge des Verstellens von Regalen (6) für das Verstellen des die als nächstes zu entnehmende Sendung (2) enthaltenden Regals (6) in die Entnahmestellung (E) ermittelt und
- bei dem das Verstellen der Regale (6) durch die Verstelleinrichtung (10,22) entsprechend der von der Steuereinrichtung (15) ermittelten Abfolge des Verstellens von Regalen (6) erfolgt.

14. Verfahren nach einem der Ansprüche 10 bis 13,
- bei dem vor dem Abfahren der Zustellroute mit Sendungen (2) bestückte Regale (6) in das Regalsystem (5,21,41) aufgenommen werden und
- bei dem, vorzugsweise, Regale des Regalsystems vor dem Abfahren der Zustellroute abgegeben werden.

15. Verfahren nach einem der Ansprüche 10 bis 14,
- bei dem eine Entnahmeeinrichtung (7), vorzugsweise mit einem Roboterarm (8), eine Sendung (2), insbesondere ein eine Sendung (2) aufweisendes Trägerelement (27), aus dem in der Entnahmestellung (E) angeordneten Regal (6) entnimmt und nach außen bezogen auf das Zustellfahrzeug (1,20,40) abgibt und
- bei dem, vorzugsweise, die Entnahmeeinrichtung (7) eine Sendung (2), insbesondere ein eine Sendung (2) aufweisendes Trägerelement (27), von außen aufnimmt und in das in der Entnahmestellung (E) angeordnete Regal (6) übergibt.

## Claims

1. Delivery vehicle (1) for delivery, in particular autonomously, of consignments (2) to different locations along a delivery route, with a loading compartment (3) comprising a shelf system (5, 21, 41) for shelves (6) holding consignments (2), wherein the shelf system (5, 21, 41) is designed for receiving shelves (6) in a plurality of storage positions (L) for provision of the shelves (6) and in at least one removal position (E) for removal of consignments (2) from the shelves (6) and wherein the shelf system (5, 21, 41) has at least one adjustment device (10, 22) for adjusting, in particular displacing, the shelves (6) of the shelf system (5, 21, 41) respectively between a plurality of storage positions (L) and the at least one removal position (E), wherein the at least one adjustment device (10, 22) is designed to adjust shelves (6) respectively in stages one after the other in different directions in order to respectively adjust the shelf (6) with the next consignment (2) to be transferred into the removal position (E), **characterised in that** the shelf system (5, 21, 41) has a grid with an empty space without shelf (6) in the manner of a sliding puzzle and **in that** a shelf (6) of the shelf system (5, 21, 41) adjoining the empty space is provided so as to be displaceable to the empty space in the longitudinal direction or in the transverse direction in relation to the grid.

2. Delivery vehicle according to claim 1 **characterised in that** the storage positions (L) of the shelf system (5, 21, 41) are arranged in rows running parallel or perpendicular to one another and/or **in that** the number of shelves (6) of the shelf system (5, 21, 41) corresponds at most, preferably at least substantially, to the number of storage positions (L) and/or **in that** the shelves (6) of the shelf system (5, 21, 41) are designed to be at least substantially identically.

3. Delivery vehicle according to claim 1 or 2, **characterised in that** the adjustment device (10, 22) is designed to adjust, in particular to displace, at least one shelf (6), preferably each shelf (6) of the shelf system (5, 21, 41), into each storage position (L) and into the removal position (E) and/or **in that** the adjustment device (10, 22) has a guide device (11, 23, 42) preferably comprising a rail system (12, 24) for guiding the shelves (6) in the shelf system (5, 21, 41) between a plurality of storage positions (L) and the removal position (E) and/or **in that** the adjustment device (10, 22) has a transport device (35) for transporting the shelves (6) from a storage position (L) into another storage position (L) and from a storage position (L) into the removal position (E), in particular along the guide device (11, 23, 42).

4. Delivery vehicle according to claim 3, **characterised in that** the transport device (35), in particular with at least one arm (29), is designed to grip in a form-fitting manner at least one shelf (6) and/or **in that** the transport device (35) has at least one drive, in particular linear drive, for transporting at least one shelf (6), in particular by means of the at least one arm (29), in at least one direction.

5. Delivery vehicle according to any one of claims 1 to 4, **characterised in that** a control device (15) is provided for controlling the adjustment device (10, 22), in particular the transport device (35), for adjusting, in particular displacing, the shelves (6) relative to one another and, preferably, for adjusting the shelf (6) with the next consignment (2) to be removed from a storage position (L) into the removal position (E).

6. Delivery vehicle according to any one of claims 1 to 5, **characterised in that** the shelves (6) have segments for receiving consignments (2), in particular in a form-fitting manner, and, preferably **in that** the shelves (6) have carrier elements (27), in particular boxes, which can be removed from the shelves (6), for receiving consignments (2).

7. Delivery vehicle according to any one of claims 1 to 6, **characterised in that** a removal device (7), preferably comprising a robot arm (8), is provided for removing a consignment (2), in particular a carrier element (27), from the shelf (6) located in the removal position (E) and, preferably **in that** the removal device (E) is provided for transferring a consignment (2), in particular a carrier element (27), into the shelf (6) located in the removal position (E).

8. Delivery vehicle according to any one of claims 1 to 7, **characterised in that** a locking device (30) is assigned to individual shelves (6), preferably to each shelf (6), for locking the respective shelf (6) in the storage position (L) and, preferably in the removal position (E).

9. Delivery vehicle according to any one of claims 1 to 8, **characterised in that** the shelf system (5, 21, 41) has at least one receiving device (16) for receiving shelves (6), provided in particular with consignments (2), and/or an output device (16) for outputting shelves (6) of the shelf system (5, 21, 41), having consignments (2) as required.

10. Method for delivery, in particular autonomously, of consignments (2) to different locations along a delivery route with a delivery vehicle (1, 20, 40), preferably according to any one of claims 1 to 9, with a loading compartment (3) comprising a shelf system (5, 21, 41) with shelves (6) for receiving consignments (2) in a plurality of storage positions (L) and at least one removal position (E), wherein the shelf system (5, 21, 41) has a grid with an empty space without shelf (6) in the manner of a sliding puzzle and wherein a shelf (6) of the shelf system (5, 21, 41) adjoining the empty space is provided so as to be displaceable to the empty space in the longitudinal direction or in the transverse direction in relation to the grid,
- in which the shelf (6) holding the next consignment (2) to be removed is adjusted, in particular displaced, from a storage position (L) into the removal position (E) via an adjustment device (10, 22),
- in which other shelves (6) of the shelf system (5, 21, 41) are adjusted in such manner that the other shelves (6), for the adjustment of the one shelf (6) into the removal position (E), release at least one storage position (L) and, preferably, the removal position (E), in particular in stages,
- in which shelves (6) are respectively adjusted in stages one after the other in different directions by means of the adjustment device (10, 22) in order to respectively adjust the shelf (6) with the next consignment (2) to be transferred into the removal position (E) and
- in which a shelf (6) of the shelf system (5, 21, 41) adjoining the empty space is displaced to the empty space in the longitudinal direction or in the transverse direction in relation to the grid.

11. Method according to claim 10, in which, in particular all, shelves (6) are adjusted, in particular displaced, respectively in stages one after the other in different directions longitudinally and transversely to the delivery vehicle (1, 20, 40) by means of the adjustment device (10, 22) in order to respectively adjust, in particular to displace, the shelf (6) with the next consignment (2) to be transferred into the removal position (E).

12. Method according to claim 10 or 11,
- in which, in particular in stages, at least one storage position (L) is released by adjusting, in particular displacing, shelves (6) and
- in which, in particular in stages, the shelf (6) with the next consignment (2) to be removed and/or another shelf (6) is adjusted, in particular displaced, into the at least one released storage position (L) and
- in which, preferably, the previously described steps of releasing and occupying storage positions (L) are carried out repeatedly, in particular until the shelf (6) with the next consignment (2) to be removed is arranged in a storage position (L) from which the shelf (6) can be adjusted, in particular displaced, directly into the removal position (E).

13. Method according to any one of claims 10 to 12,
- in which a control device (15) determines, as a function at least of the arrangement of the shelf (6) with the next consignment (2) to be removed, an expedient sequence of adjustment of shelves (6) for adjusting the shelf (6) containing the next consignment (2) to be removed into the removal position (E) and
- in which the adjustment of the shelves (6) by the adjustment device (10, 22) takes place according to the sequence of adjustment of shelves (6) determined by the control device (15).

14. Method according to any one of claims 10 to 13,
- in which shelves (6) carrying consignments (2) are received in the shelf system (5, 21, 41) before the delivery route is driven and
- in which, preferably, shelves of the shelf system are output before the delivery route is driven.

15. Method according to any one of claims 10 to 14,
- in which a removal device (7), preferably with a robot arm (8), removes a consignment (2), in particular a carrier element (27) with a consignment (2), from the shelf (6) arranged in the removal position (E) and outputs it outwards in relation to the delivery vehicle (1, 20, 40) and
- in which, preferably, the removal device (7) receives a consignment (2), in particular a carrier element (27) with a consignment (2), from the outside and transfers it to the shelf (6) arranged in the removal position (E).

## Revendications

1. Véhicule de livraison (1) destiné à la livraison, notamment autonome, de colis (2) à différents endroits le long d'un itinéraire de livraison, avec un espace de chargement (3) comportant un système d'étagères (5, 21, 41) présentant des étagères (6) pour les colis (2), le système d'étagères (5, 21, 41) étant conçu pour loger des étagères (6) dans une pluralité de positions de stockage (L) pour la mise à disposition des étagères (6) et dans au moins une position de prélèvement (E) pour le retrait de colis (2) des étagères (6) et le système d'étagères (5, 21, 41) comportant au moins un dispositif de réglage (10, 22) pour le réglage, notamment le déplacement, des étagères (6) du système d'étagères (5, 21, 41) respectivement entre plusieurs positions de stockage (L) et l'au moins une position de prélèvement (E), ledit au moins un dispositif de réglage (10, 22) étant conçu pour régler les étagères (6), notamment progressivement, les unes après les autres, dans différentes directions, de sorte à régler l'étagère (6) respective avec le colis suivant (2) à livrer dans la position de prélèvement (E), **caractérisé en ce que** le système d'étagères (5, 21, 41) présente une trame avec un espace vide sans étagère (6), du type puzzle coulissant, et **en ce qu'**une étagère (6) du système d'étagère (5, 21, 41), adjacente à l'espace vide, peut être déplacée dans le sens longitudinal ou transversal par rapport à la trame sur l' espace vide.

2. Véhicule de livraison selon la revendication 1, **caractérisé en ce que** les positions de stockage (L) du système d'étagères (5, 21, 41) sont agencées en rangées parallèles ou perpendiculaires les unes aux autres et/ou **en ce que** le nombre d'étagères (6) du système d'étagères (5, 21, 41) correspond au maximum, de préférence au moins essentiellement, au nombre de positions de stockage (L) et/ou **en ce que** les étagères (6) du système d'étagères (5, 21, 41) sont conçues au moins sensiblement de la même manière.

3. Véhicule de livraison selon la revendication 1 ou 2, **caractérisé en ce que** le dispositif de réglage (10, 22) est conçu pour le réglage, notamment pour le déplacement, d'au moins une étagère (6), de préférence chaque étagère (6) du système d'étagères (5, 21, 41), dans chaque position de stockage (L) ainsi que dans la position de prélèvement (E) et/ou **en ce que** le dispositif de réglage (10, 22) comprend un dispositif de guidage (11, 23, 42) comportant, de préférence, un système de rails (12, 24) pour guider les étagères (6) dans le système d'étagères (5, 21, 41) entre plusieurs positions de stockage (L) et la position de prélèvement (E) et/ou **en ce que** le dispositif de réglage (10, 22) présente un dispositif de transport (35) pour le transport des étagères (6) d'une position de stockage (L) à une autre position de stockage (L) et d'une position de stockage (L) à la position de prélèvement (E), notamment le long du dispositif de guidage (11, 23, 42).

4. Véhicule de livraison selon la revendication 3, **caractérisé en ce que** le dispositif de transport (35), notamment avec au moins un bras (29), est conçu pour entrer en prise par liaison de forme avec au moins une étagère (6) et/ou **en ce que** le dispositif de transport (35) présente au moins un entraînement, notamment un entraînement linéaire, pour le transport d'au moins une étagère (6), notamment au moyen d'au moins un bras (29), dans au moins une direction.

5. Véhicule de livraison selon l'une des revendications 1 à 4, **caractérisé en ce que** l'on prévoit un dispositif de commande (15) pour la commande du dispositif de réglage (10, 22), notamment du dispositif de transport (35), pour le réglage, notamment pour le déplacement, des étagères (6) entre elles et, de préférence, pour le réglage des étagères (6) avec le colis (2) suivant à prélever d'une position de stockage (L) en position de prélèvement (E).

6. Véhicule de livraison selon l'une des revendications 1 à 5, **caractérisé en ce que** les étagères (6) présentent des segments pour le logement, notamment par complémentarité de forme, de colis (2) et, de préférence, **en ce que** les étagères (6) comportent des éléments porteurs (27), notamment des boîtes, pouvant être prélevées hors des étagères (6), pour loger des colis (2).

7. Véhicule de livraison selon l'une des revendications 1 à 6, **caractérisé en ce que** l'on prévoit un dispositif de prélèvement (7), de préférence comprenant un bras robotisé (8), pour le prélèvement d'un colis (2), notamment d'un élément porteur (27), de l'étagère (6) se trouvant dans la position de prélèvement (E) et, de préférence, **en ce que** l'on prévoit le dispositif de prélèvement (E) pour le transfert d'un colis (2), notamment d'un élément porteur (27), dans l'étagère (6) se trouvant dans la position de prélèvement (E).

8. Véhicule de livraison selon l'une des revendications 1 à 7, **caractérisé en ce que** certaines étagères (6), de préférence chaque étagère (6), sont associées à un dispositif d'arrêt (30) pour arrêter l'étagère (6) concernée en position de stockage (L) et, de préférence, en position de prélèvement (E).

9. Véhicule de livraison selon l'une des revendications 1 à 8, **caractérisé en ce que** le système d'étagères (5, 21, 41) présente au moins un dispositif de logement (16) pour le logement des étagères (6), notamment dotées de colis (2), et/ou d'un dispositif de distribution (16) pour la distribution d'étagères (6) du système d'étagères (5, 21, 41) comportant, selon les besoins, des colis (2).

10. Procédé de livraison, notamment autonome, de colis (2) à différents endroits le long d'un itinéraire de livraison avec un véhicule de livraison (1, 20, 40), de préférence selon l'une des revendications 1 à 9, avec un espace de chargement (3) comportant un système d'étagères (5, 21, 41) avec des étagères (6) pour le logement de colis (2) dans une pluralité de positions de stockage (L) et au moins une position de prélèvement (E), le système d'étagères (5, 21, 41) comportant une trame avec un espace vide sans étagère (6), du type puzzle coulissant, une étagère (6) du système d'étagères (5, 21, 41) adjacente à l' espace vide étant prévue déplaçable, dans le sens longitudinal ou transversal, par rapport à la trame sur l'espace vide,
- dans lequel l'étagère (6) comportant le colis suivant (2) à prélever est réglée, notamment déplacée, d'une position de stockage (L) à la position de prélèvement (E) à l'aide d'un dispositif de réglage (10,22),
- dans lequel les autres étagères (6) du système d'étagères (5, 21, 41) sont réglées de manière à ce que les autres étagères (6), pour le réglage de l'une des étagères (6) en position de prélèvement (E), puissent libérées, notamment progressivement, au moins une position de stockage (L) et, de préférence, la position de prélèvement (E),
- dans lequel les étagères (6) sont réglées, notamment progressivement, les unes après les autres, dans différentes directions au moyen du dispositif de réglage (10, 22) afin de régler à chaque fois l'étagère (6) avec le colis suivant (2) devant à livrer dans la position de prélèvement (E) et
- dans lequel une étagère (6) du système d'étagères (5, 21, 41) adjacente à l'espace vide est déplacée, dans le sens longitudinal ou transversal, par rapport à la trame sur l'espace vide.

11. Procédé selon la revendication 10, dans lequel notamment toutes les étagères (6) sont réglées, notamment déplacées, au moyen du dispositif de réglage (10, 22), progressivement, dans différentes directions longitudinales et transversales par rapport au véhicule de livraison (1, 20, 40), de façon à régler, notamment déplacer, respectivement l'étagère (6) avec le colis suivant (2) à livrer dans la position de prélèvement (E).

12. Procédé selon la revendication 10 ou 11,
- dans lequel, au moins une position de stockage (L) est libérée, notamment progressivement, par le réglage, notamment le déplacement, des étagères (6) et
- dans lequel, l'étagère (6) avec le colis suivant (2) à prélever et/ou une autre étagère (6) est réglée, notamment déplacée, notamment progressivement, dans au moins une position de stockage (L) libérée, et
- dans lequel, de préférence, les étapes de libération et de chargement des positions de stockage (L) décrites ci-dessus sont répétées, notamment jusqu'à ce que l'étagère (6) avec le colis suivant (2) à prélever soit agencée dans une position de stockage (L) à partir de laquelle l'étagère (6) peut être réglée, notamment déplacée, directement dans la position de prélèvement (E).

13. Procédé selon l'une des revendications 10 à 12,
- dans lequel un dispositif de commande (15) détermine, en fonction au moins de l'agencement de l'étagère (6) avec le colis suivant (2) à prélever, une séquence utile de réglage des étagères (6) pour régler l'étagère (6) contenant le colis suivant (2) à prélever dans la position de prélèvement (E) et
- dans lequel le réglage des étagères (6) est effectué par le dispositif de réglage (10, 22) en fonction de la séquence de réglage des étagères (6) déterminée par le dispositif de commande (15).

14. Procédé selon l'une des revendications 10 à 13,
- dans lequel les étagères (6) approvisionnées en colis (2) sont intégrées dans le système d'étagères (5, 21, 41) avant la conduite de l'itinéraire de livraison, et
- dans lequel, de préférence, les étagères du système d'étagères sont déposées avant la conduite de l'itinéraire de livraison.

15. Procédé selon l'une des revendications 10 à 14,
- dans lequel un dispositif de prélèvement (7), de préférence avec un bras robotisé (8), prélève un colis (2), notamment un élément porteur (27) comportant un colis (2), de l'étagère (6) agencée dans la position de prélèvement (E) et le dépose à l'extérieur par rapport au véhicule de livraison (1, 20, 40), et
- dans lequel, de préférence, le dispositif de prélèvement (7) réceptionne depuis l'extérieur un colis (2), notamment un élément porteur (27) comportant un colis (2) et le transfère dans l'étagère (6) agencée dans la position de prélèvement (E).
